# EUROPÄISCHE PATENTSCHRIFT

(11) **EP 1 175 262 B1**
(45) Veröffentlichungstag und Bekanntmachung des Hinweises auf die Patenterteilung: **18.02.2004**
(21) Anmeldenummer: 00926878.0
(22) Anmeldetag: 12.04.2000
(51) Int. Cl.: B01J 31/22, B01J 31/14, C08F 4/642, C08F 110/06

(54) **KATALYSATORSYSTEM**
CATALYST SYSTEM
SYSTEME CATALYSEUR

(30) Priorität: 21.04.1999 DE 19917985
(43) Veröffentlichungstag der Anmeldung: 30.01.2002
(73) Patentinhaber: Basell Polyolefine GmbH, 50389 Wesseling (DE)
(72) Erfinder: SCHOTTEK, Jörg, D-60486 Frankfurt (DE); BECKER, Patricia, D-64546 Mörfelden-Walldorf (DE)
(74) Vertreter: Seelert, Stefan, Dr.
(86) Internationale Anmeldenummer: PCT/EP2000/003263
(87) Internationale Veröffentlichungsnummer: WO 2000/062928

(56) Entgegenhaltungen:
- EP-A- 0 619 326
- EP-A- 0 781 783
- WO-A-96/04319
- WO-A-96/23005
- DE-A- 19 757 540
- DE-A- 19 828 271

## Beschreibung

Die vorliegende Erfindung beschreibt ein Katalysatorsystem bestehen aus einem Metallocen, einem Co-Katalysator, einem Trägermaterial und gegebenenfalls einer weiteren Organometallverbindung. Das Katalysatorsystem kann vorteilhaft zur Polymerisation von Olefinen eingesetzt werden. Hierbei wird auf die Verwendung von Aluminoxanen wie Methylaluminoxan (MAO) als Cokatalysator verzichtet und dennnoch eine hohe Katalysatoraktivität und gute Polymermorphologie erzielt.

Die Rolle von kationischen Komplexen bei der Ziegler-Natta-Polymerisation mit Metallocenen ist allgemein anerkannt (H.H. Brintzinger, D. Fischer, R. Mülhaupt, R. Rieger, R. Waymouth, Angew. Chem. 1995, 107, 1255-1283).

MAO als wirksamer Co-Katalysator hat den Nachteil in hohem Überschuß eingesetzt werden zu müssen. Die Darstellung kationischer Alkylkomplexe eröffnet den Weg MAO freier Katalysatoren mit vergleichbarer Aktivität, wobei der Co-Katalysator nahezu stöchiometrisch eingesetzt werden kann.

Die Synthese von "Kationen-ähnlichen" Metallocen-Polymerisationskatalysatoren, wird im J. Am. Chem. Soc. 1991, 113, 3623 beschrieben. Ein Verfahren zur Herstellung von Salzen der allgemeinen Form LMX⁺ XA- nach dem oben beschriebenen Prinzip wird in EP-A-0 520 732 beansprucht.

EP-A-0 558 158 beschreibt zwitterionische Katalysatorsysteme, die aus Metallocendialkyl-Verbindungen und Salzen der Form [R₃NH]⁺ [B(C₆H₅)₄]- dargestellt werden Die Umsetzung eines solchen Salzes mit z.B. Cp₂ZrMe₂ liefert durch Protolyse unter Methanabspaltung intermediär ein Zirkonocenmethyl-Kation. Dieses reagiert über C-H-Aktivierung zum Zwitterion Cp₂Zr⁺-(m-C₆H₄)-BPh₃⁻ ab. Das Zr-Atom ist dabei kovalent an ein Kohlenstoffatom des Phenylrings gebunden und wird über agostische Wasserstoffbindungen stabilisiert.

US-A-5,384,299 beschreibt zwitterionische Katalysatorsysteme, die aus Metallocendialkyl-Verbindungen und Salzen der Form [R₃NH]⁺ [B(C₆F₅)₄]⁻ durch Protolyse dargestellt werden. Die C-H-Aktivierung als Folgereaktion unterbleibt dabei.

EP-A-0 426 637 nutzt ein Verfahren in dem das Lewis-saure CPh₃⁺ Kation zur Abstraktion der Methylgruppe vom Metallzentrum eingesetzt wird. Als schwach koordinierendes Anion fungiert ebenfalls B(C₆F₅)₄-.

Eine industrielle Nutzung von Metallocen-Katalysatoren fordert eine Heterogenisierung des Katalysatorsystems, um eine entsprechende Morphologie des resultierenden Polymers zu gewährleisten. Die Trägerung von kationischen Metallocen-Katalysatoren auf Basis der oben genannten Borat-Anionen ist in WO 91/09882 beschrieben. Dabei wird das Katalysatorsystem, durch Aufbringen einer Dialkylmetallocen-Verbindung und einer BrØnsted sauren, quatären Ammonium-Verbindung, mit einem nichtkoordinierenden Anion wie Tetrakispentafluorphenylborat, auf einem anorganischen Träger, gebildet. Das Trägermaterial wird zuvor mit einer Trialkylaluminium-Verbindung modifiziert.

Nachteil dieses Trägerungsverfahren ist, daß nur ein geringer Teil des eingesetzten Metallocens durch Physisorbtion an dem Trägermaterial fixiert ist. Bei der Dosierung des Katalysatorsystems in den Reaktor kann das Metallocen leicht von der Trägeroberfläche abgelöst werden. Dies führt zu einer teilweisen homogen verlaufenden Polymerisation, was eine unbefriedigende Morphologie des Polymers zur Folge hat. Im WO96/04319 wird ein Katalysatorsystem beschrieben, in welchem der Cokatalysator kovalent an das Trägermaterial gebunden ist. Dieses Katalysatorsystem weist jedoch eine geringe Polymerisationsaktivität auf, zudem kann die hohe Empfindlichkeit der geträgerten kationischen Metallocen-Katalysatoren zu Problemen bei der Einschleusung in das Polymerisationssystem führen.

Es war daher wünschenswert ein Katalysatorsystem zu entwickeln, das wahlweise vor dem Einschleusen in den Reaktor bereits aktiviert ist oder erst im Polymerisationsautoklav aktiviert wird. Die Aufgabe bestand darin ein Katalysatorsystem zur Verfügung zu stellen, welches die Nachteile des Standes der Technik vermeidet und trotzdem hohe Polymersationsaktivitäten und eine gute Polymermorphologie garantiert. Zudem war ein Verfahren zur Herstellung dieses Katalysatorsystems zu entwickeln, das es ermöglicht die Aktivierung des Katalysatorsystems wahlweise vor dem Einschleusen oder aber erst im Polymerisationsautoklav durchzuführen.

Die vorliegende Erfindung betrifft ein geträgertes Katalysatorsystem und ein Verfahren zur Herstellung von diesem. Weiterer Gegenstand der vorliegenden Erfindung ist die Verwendung des erfindungsgemäßen Katalysatorsystems in der Herstellung von Polyolefi nen, sowie ein entsprechenden Polymerisationsverfahren.

Das erfindungsgemäße Katalysatorsystem enthält
A) mindestens ein Metallocen,
B) mindestens eine Lewis Base der Formel I

   M¹R³R⁴R⁵ (I)

   worin
   - R³, R⁴, R⁵: gleich oder verschieden sind und ein wasserstoffatom, eine C₁-C₂₀ Alkyl-, C₁-C₂₀ Halogenalkyl-, C₆-C₄₀ Aryl-, C₆-C₄₀ Halogenaryl-, C₇-C₄₀ Alkylaryl- oder C₇-C₄₀ Arylalkyl-Gruppe ist und zwei Reste oder alle drei Reste R³, R⁴ und R⁵ über C₂-C₂₀ Kohlenstoffeinheiten miteinander verbunden sein können,
   - M¹: ist ein Element der V. Hauptgruppe des Periodensystems der Elemente, insbesondere Stickstoff oder Phosphor
C) mindestens einen Träger
D) und mindestens eine Organobor- oder Organoaluminium-Verbindung, die aus Einheiten der Formel II

   [(R⁶)-X-M²(R⁸)-X-(R⁷)]ₖ (II)

   worin
   - R⁶, R⁷: gleich oder verschieden sind und ein Wasserstoffatom, ein Halogenatom, eine borfreie C₁-C₄₀-kohlenstoffhaltige Gruppe wie C₁-C₂₀-Alkyl, C₁-C₂₀-Halogenalkyl, C₁-C₁₀-Alkoxy, C₆-C₂₀-Aryl, C₆-C₂₀-Halogenaryl, C₆-C₂₀-Aryloxy, C₇-C₄₀-Arylalky, C₇-C₄₀-Halogenarylalky, C₇-C₄₀-Alkylaryl, C₇-C₄₀-Halogenalkylaryl oder eine SiR₃⁹-Gruppe bedeutet,
   - wobei R⁹: eine borfreie C₁-C₄₀-kohlenstoffhaltige Gruppe wie C₁-C₂₀-Alkyl, C₁-C₂₀-Halogenalkyl, C₁-C₁₀-Alkoxy, C₆-C₂₀-Aryl, C₆-C₂₀-Halogenaryl, C₆-C₂₀-Aryloxy, C₇-C₄₀-Arylalky, C₇-C₄₀-Halogenarylalky, C₇-C₄₀-Alkylaryl, C₇-C₄₀-Halogenalkylaryl sein kann,
   - R⁸: kann gleich oder verschieden zu R⁶ und R⁷, ein wasserstoffatom, ein Halogenatom, eine C₁-C₄₀-kohlenstoffhaltige Gruppe wie C₁-C₂₀-Alkyl, C₁-C₂₀-Halogenalkyl, C₁-C₁₀-Alkoxy, C₆-C₂₀-Aryl, C₆-C₂₀-Halogenaryl, C₆-C₂₀-Aryloxy, C₇-C₄₀-Arylalky, C₇-C₄₀-Halogenarylalky, C₇-C₄₀-Alkylaryl, C₇-C₄₀-Halogenalkylaryl oder eine OSi(R⁹)₃-Gruppe bedeutet,
   - X: gleich oder verschieden ein Element der Gruppe V oder VIa des Periodensystems der Elemente oder eine NH-Gruppe bedeutet,
   - M²: ein Element der Gruppe IIIa des Periodensystems der Elemente bedeutet und
   - k: eine natürliche Zahl von 1 bis 100 bedeutet
aufgebaut ist und die kovalent an den Träger gebunden ist.

Die Verbindungen der Formel (II) können als Monomer oder als lineares, cyclisches oder käfigartiges Oligomer vorliegen. Der Index k ist das Ergebnis Lewis Säure-Base Wechselwirkungen der erfindungsgemäßen chemischen Verbindung der Formel (II), wobei diese untereinander Dimere, Trimere oder höhere Oligomere bilden.

Zudem sind besonders bevorzugt Verbindungen in denen M² Aluminium oder Bor ist.

Bevorzugte Verbindungen der Formel (I) sind Triethylamin, Triisopropylamin, Triisobutylamin, Tri(n-butyl)amin, N,N-Dimethylanilin, N,N-Diethylanilin, N,N-2,4,6-Pentamethylanilin, Dicyclohexylamin, Pyridin, Pyrazin, Triphenylphosphin, Tri(methylphenyl)phosphin, Tri(dimethylphenyl)phosphin.

Bevorzugte cokatalytisch wirkende chemische Verbindung der Formel (II), sind Verbindungen in denen X ein Sauerstoff Atom oder eine NH-Gruppe ist und die Reste R⁶ und R⁷ ein borfreier C₁-C₄₀-Kohlenwasserstoffrest, der mit Halogen wie Fluor, Chlor, Brom oder Iod halogeniert, bevorzugt perhalogeniert, sein kann, insbesondere eine halogenierte, insbesondere perhalogenierte C₁-C₃₀-Alkylgruppe wie Trifluormethyl-, Pentachlorethyl-, Heptafluorisopropyl oder Monofluorisobutyl oder eine halogenierte C₆-C₃₀-Arylgruppe wie Pentafluorphenyl-, 2,4,6-Trifluorphenyl, Heptachlornaphtyl-, Heptafluornaphthyl-, Heptafluortolyl-, 3,5-bis(trifluormehtyl)phenyl-, 2,4,6-tris(trifluormethyl)phenyl, Nonafluorbiphenyl- oder 4-(trifluormethyl)phenyl. Ebenfalls bevorzugt für R⁶und R⁷ sind Reste wie Phenyl-, Naphthyl-, Anisyl-, Mehtyl-, Ethyl-, Isopropyl-, Butyl-, Tolyl-, Biphenyl oder 2,3-Dimethyl-phenyl. Besonders bevorzugt für R⁶ und R⁷ die Reste Pentafluorphenyl-, Phenyl-, Biphenyl, Bisphenylmethylen, 3,5-bis(trifluormethyl)phenyl-, 4-(trifluor-methyl)phenyl, Nonafluorbiphenyl-, Bis (pentafluorophenyl)methylen und 4-Methyl-phenyl.

R⁸ ist besonders bevorzugt ein borfreier C₁-C₄₀-Kohlenwasserstoffrest, der mit Halogen wie Fluor, Chlor, Brom oder Iod halogeniert, bevorzugt perhalogeniert, sein kann, insbesondere eine halogenierte, insbesondere perhalogenierte C₁-C₃₀-Alkylgruppe wie Trifluormethyl-, Pentachlorethyl-, Heptafluorisopropyl oder Monofluorisobutyl oder eine halogenierte C₆-C₃₀-Arylgruppe wie Pentafluorphenyl-, 2,4,6-Trifluorphenyl, Heptachlornaphtyl-, Heptafluornaphthyl-, Heptafluortolyl-, 3,5-bis(trifluormehtyl)phenyl-, 2,4,6-tris(trifluormethyl)phenyl, Nonafluorbiphenyl- oder 4-(trifluormethyl)phenyl. Ebenfalls bevorzugt für R⁸ sind Reste wie Phenyl-, Naphthyl-, Anisyl-, Mehtyl-, Ethyl-, Isopropyl-, Butyl-, Tolyl-, Biphenyl oder 2,3-Dimethyl-phenyl. Besonders bevorzugt für R³ sind die Reste Mehtyl-, Ethyl-, Isopropyl-, Butyl-Pentafluorphenyl-, Phenyl-, Biphenyl, Bisphenylmethylen, 3,5-bis(trifluor-methyl)phenyl-, 4-(trifluor-methyl)phenyl, Nonafluorbiphenyl-, Bis (penta-fluorophenyl) methylen und 4-Methyl-phenyl.

Ganz besonders bevorzugte cokatalytisch wirkende chemische Verbindungen der Formel (II) sind solche, in denen X für Sauerstoff, Schwefel oder eine NH-Gruppe, M² für Aluminium oder Bor steht.

Nicht einschränkende Beispiele zur Verdeutlichung der Formel II (können auch unfluoriert sein):

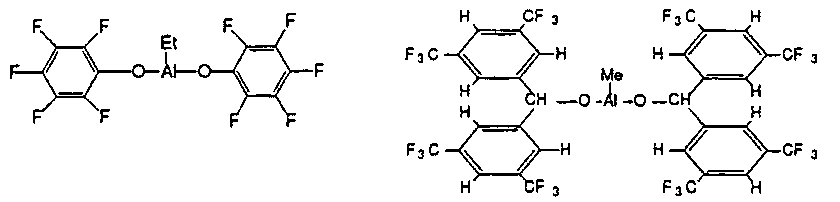

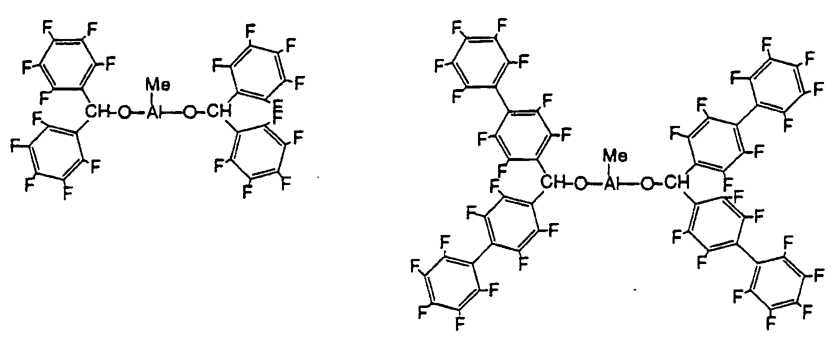

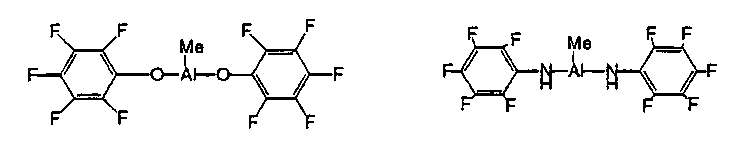

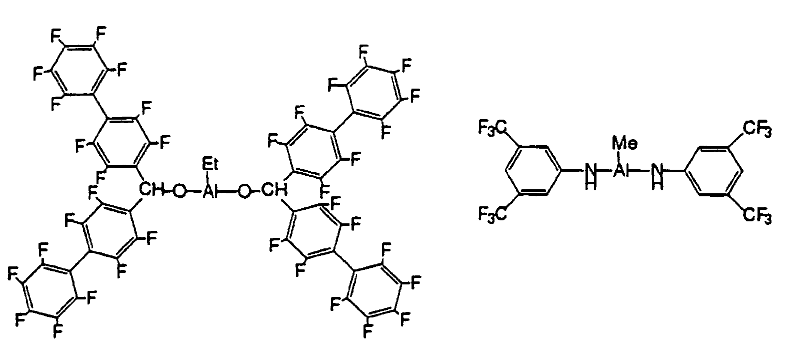

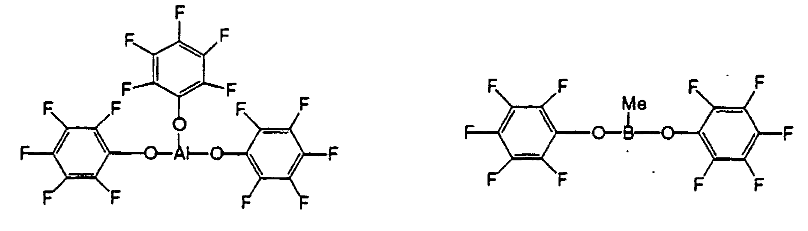

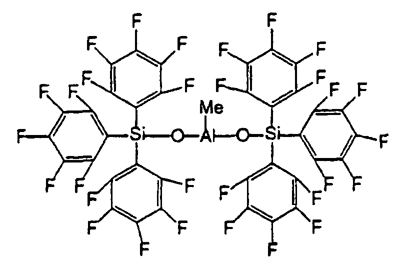

Die Trägerkomponente des erfindungsgemäßen Katalysatorsystems kann ein beliebiger organischer oder anorganischer, inerter Feststoff sein, insbesondere ein poröser Träger wie Talk, anorganische Oxide und feinteilige Polymerpulver (z.B. Polyolefine).

Geeignete anorganische Oxide finden sich in den Gruppen 2, 3, 4, 5, 13, 14, 15 und 16 des Periodensystems der Elemente. Beispiele für als Träger bevorzugte Oxide umfassen Siliciumdioxid, Aluminiumoxid, sowie Mischoxide der beiden Elemente und entsprechende Oxid-Mischungen. Andere anorganische Oxide, die allein oder in Kombination mit den zuletzt genannten bevorzugten oxiden Trägern eingesetzt werden können, sind z.B. MgO, ZrO₂ , TiO₂ oder B₂O₃ ,um nur einige zu nennen.

Die verwendeten Trägermaterialien weisen eine spezifische Oberfläche im Bereich von 10 bis 1000 m²/g, ein Porenvolumen im Bereich von 0,1 bis 5 ml/g und eine mittlere Partikelgröße von 1 bis 500 µm auf. Bevorzugt sind Träger mit einer spezifischen Oberfläche im Bereich von 50 bis 500 µm, einem Porenvolumen im Bereich zwischen 0,5 und 3,5 ml/g und einer mittleren Partikelgröße im Bereich von 5 bis 350 µm. Besonders bevorzugt sind Träger mit einer spezifischen Oberfläche im Bereich von 200 bis 400 m²/g, einem Porenvolumen im Bereich zwischen 0,8 bis 3,0 ml/g und einer mittleren Partikelgröße von 10 bis 200 µm.

Wenn das verwendete Trägermaterial von Natur aus einen geringen Feuchtigkeitsgehalt oder Restlösemittelgehalt aufweist, kann eine Dehydratisierung oder Trocknung vor der Verwendung unterbleiben. Ist dies nicht der Fall, wie bei dem Einsatz von Silicagel als Trägermaterial, ist eine Dehydratisierung oder Trocknung empfehlenswert. Die thermische Dehydratisierung oder Trocknung des Trägermaterials kann unter Vakuum und gleichzeitiger Inertgasüberlagerung (z.B. Stickstoff) erfolgen. Die Trocknungstemperatur liegt im Bereich zwischen 100 und 1000 °C, vorzugsweise zwischen 200 und 800 °C. Der Parameter Druck ist in diesem Fall nicht entscheidend. Die Dauer des Trocknungsprozesses kann zwischen 1 und 24 Stunden betragen. Kürzere oder längere Trocknungsdauern sind möglich, vorausgesetzt, daß unter den gewählten Bedingungen die Gleichgewichtseinstellung mit den Hydroxylgruppen auf der Trägeroberfläche erfolgen kann, was normalerweise zwischen 4 und 8 Stunden erfordert.

Eine Dehydratisierung oder Trocknung des Trägermaterials ist auch auf chemischem Wege möglich, indem das adsorbierte Wasser und die Hydroxylgruppen auf der Oberfläche mit geeigneten Inertisierungsmitteln zur Reaktion gebracht werden. Durch die Umsetzung mit dem Inertisierungsreagenz können die Hydroxylgruppen vollständig oder auch teilweise in eine Form überführt werden, die zu keiner negativen Wechselwirkung mit den katalytisch aktiven Zentren führt. Geeignete Inertisierungsmittel sind beispielsweise Siliciumhalogenide und Silane, wie Siliciumtetrachlorid, Chlortrimethylsilan, Dimethylaminotrichlorsilan oder metallorganische Verbindungen von Aluminium- , Bor und Magnesium wie beispielsweise Trimethylaluminium, Triethylaluminium, Triisobutylaluminium, Triethylboran, Dibutylmagnesium. Die chemische Dehydratisierung oder Inertisierung des Trägermaterials erfolgt beispielsweise dadurch, daß man unter Luft- und Feuchtigkeitsausschluß eine Suspension des Trägermaterials in einem geeigneten Lösemittel mit dem Inertisierungsreagenz in reiner Form oder gelöst in einem geeigneten Lösemittel zur Reaktion bringt. Geeignete Lösemittel sind z.B. aliphatische oder aromatische Kohlenwasserstoffe wie Pentan, Hexan, Heptan, Toluol oder Xylol. Die Inertisierung erfolgt bei Temperaturen zwischen 25 °C und 120 °C, bevorzugt zwischen 50 und 70 °C. Höhere und niedrigere Temperaturen sind möglich. Die Dauer der Reaktion beträgt zwischen 30 Minuten und 20 Stunden, bevorzugt 1 bis 5 Stunden. Nach dem vollständigen Ablauf der chemischen Dehydratisierung wird das Trägermaterial durch Filtration unter Inertbedingungen isoliert, ein- oder mehrmals mit geeigneten inerten Lösemitteln wie sie bereits zuvor beschrieben worden sind gewaschen und anschließend im Inertgasstrom oder am Vakuum getrocknet.

Organische Trägermaterialien wie feinteilige Polyolefinpulver (z.B. Polyethylen, Polypropylen oder Polystyrol) können auch verwendet werden und sollten ebenfalls vor dem Einsatz von anhaftender Feuchtigkeit, Lösemittelresten oder anderen Verunreinigungen durch entsprechende Reinigungs- und Trocknungsoperationen befreit werden.

Die erfindungsgemäßen chemischen Verbindungen der Formel (I) können zusammen mit einer Organometallübergangsverbindung als Katalysatorsystem verwendet werden. Als Organometallübergangsverbindung werden z.B. Metallocenverbindungen eingesetzt. Dies können z.B. verbrückte oder unverbrückte Biscyclopentadienylkomplexe sein, wie sie beispielsweise in EP-A-0 129 368, EP-A-0 561 479, EP-A-0 545 304 und EP-A-0 576 970 beschrieben sind, Monocyclopentadienylkomplexe, wie verbrückte Amidocyclopentadienylkomplexe die beispielsweise in EP-A-0 416 815 beschrieben sind, mehrkernige Cyclopentadienylkomplexe wie beispielsweise in EP-A-0 632 063 beschrieben, π-Ligand substituierte Tetrahydropentalene wie beispielsweise in EP-A-0 659 758 beschrieben oder π-Ligand substituierte Tetrahydroindene wie beispielsweise in EP-A-0 661 300 beschrieben. Außerdem können Organometallverbindungen eingesetzt werden in denen der komplexierende Ligand kein Cyclopentadienyl-Liganden enthält. Beispiele hierfür sind Diamin-Komplexe der III. Und IV. Nebengruppe des Periodensystems der Elemente, wie sie z.B. bei D.H. McConville, et al, Macromolecules, 1996, 29, 5241 und D.H. McConville, et al, J. Am. Chem. Soc., 1996, 118, 10008 beschrieben werden. Außerdem können Diimin-Komplexe der VIII. Nebengruppe des Periodensystems der Elemente (z.B. Ni²⁺ oder Pd²⁺ Komplexe), wie sie bei Brookhart et al, J. Am. Chem. Soc. 1995, 117, 6414 und, Brookhart et al, J. Am. Chem. Soc., 1996, 118, 267 beschrieben werden, eingesetzt werden. Ferner lassen sich 2,6-bis(imino)pyridyl-Komplexe der VIII. Nebengruppe des Periodensystems der Elemente (z.B. Co²⁺ oder Fe²⁺ Komplexe), wie sie bei Brookhart et al, J. Am. Chem. Soc. 1998, 120, 4049 und Gibson et al, Chem. Commun. 1998, 849 beschrieben werden, einsetzen. Weiterhin können Metallocenverbindungen eingesetzt werden, deren komplexierender Ligand Heterocyclen enthält. Beispiele hierfür sind in WO 98/22486 beschrieben.

Bevorzugte Metallocenverbindungen sind unverbrückte oder verbrückte Verbindungen der Formel (III), 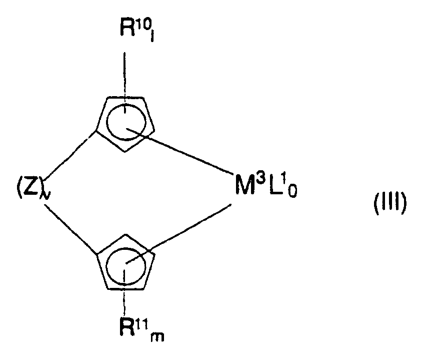 worin
- M³: ein Metall der III., IV., V. oder VI. Nebengruppe des Periodensystems der Elemente ist, insbesondere Ti, Zr oder Hf,
- R¹⁰: gleich oder verschieden sind und ein wasserstoffatom oder Si(R¹²)₃ sind, worin R¹² gleich oder verschieden ein Wasserstoffatom oder eine C₁-C₄₀-kohlenstoffhaltige Gruppe, bevorzugt C₁-C₂₀-Alkyl, C₁-C₁₀-Fluoralkyl, C₁-C₁₀-Alkoxy, C₆-C₂₀-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl, oder R¹⁰ eine C₁-C₃₀ - kohlenstoffhaltige Gruppe, bevorzugt C₁-C₂₅-Alkyl, wie Methyl, Ethyl, tert.-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist, oder zwei oder mehrere Reste R¹⁰ können so miteinander verbunden sein, daß die Reste R¹⁰ und die sie verbindenden Atome des Cyclopentadienylringes ein C₄-C₂₄-Ringsystem bilden, welches seinerseits substituiert sein kann,
- R¹¹: gleich oder verschieden sind und ein wasserstoffatom oder Si(R¹²)₃ sind, worin R¹² gleich oder verschieden ein Wasserstoffatom oder eine C₁-C₄₀-kohlenstoffhaltige Gruppe, bevorzugt C₁-C₂₀-Alkyl, C₁-C₁₀-Fluoralkyl, C₁-C₁₀-Alkoxy, C₆-C₁₄-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl, oder R¹¹ eine C₁-C₃₀- kohlenstoffhaltige Gruppe, bevorzugt C₁-C₂₅-Alkyl, wie Methyl, Ethyl, tert.-Butyl, Cyclohexyl oder Octyl, C₂-C₂₅-Alkenyl, C₃-C₁₅-Alkylalkenyl. C₆-C₂₄-Aryl, C₅-C₂₄-Heteroaryl, C₅-C₂₄-Alkylheteroaryl, C₅-C₂₄-Alkylheteroaryl C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist, oder zwei oder mehrere Reste R¹¹ können so miteinander verbunden sein, daß die Reste R¹¹ und die sie verbindenden Atome des Cyclopentadienylringes ein C₄-C₂₄-Ringsystem bilden, welches seinerseits substituiert sein kann,
- l: gleich 5 für v = 0, und 1 gleich 4 für v = 1 ist,
- m: gleich 5 für v = 0, und m gleich 4 für v = 1 ist,
- L¹: gleich oder verschieden sein können und ein Wasserstoffatom, eine C₁-C₁₀-Kohlenwasserstoffgruppe wie C₁-C₁₀-Alkyl oder C₆-C₁₀-Aryl, ein Halogenatom, oder OR¹⁶, SR¹⁶, OSi(R¹⁶)₃, Si(R¹⁶)₃, P(R¹⁶)₂ oder N(R¹⁶)₂ bedeuten, worin R¹⁶ ein Halogenatom, eine C₁-C₁₀ Alkylgruppe, eine halogenierte C₁-C₁₀ Alkylgruppe, eine C₆-C₂₀ Arylgruppe oder eine halogenierte C₆-C₂₀ Arylgruppe sind, oder L¹ sind eine Toluolsulfonyl-, Trifluoracetyl-, Trifluoracetoxyl-, Trifluormethansulfonyl-, Nonafluorbutansulfonyl- oder 2,2,2-Trifluorethansulfonyl-Gruppe,
- o: eine ganze Zahl von 1 bis 4, bevorzugt 2 ist,
- Z ein: verbrückendes Strukturelement zwischen den beiden Cyclopentadienylringen bezeichnet und v ist 0 oder 1.

Beispiele für Z sind Gruppen M⁴R¹³R¹⁴, worin M⁴ Kohlenstoff, Silizium, Germanium oder Zinn ist und R¹³ und R¹⁴ gleich oder verschieden eine C₁-C₂₀-kohlenwasserstoffhaltige Gruppe wie C₁-C₁₀-Alkyl, C₆-C₁₄-Aryl oder Trimethylsilyl bedeuten. Bevorzugt ist Z gleich CH₂, CH₂CH₂, CH(CH₃)CH₂, CH(C₄H₉)C(CH₃)₂, C(CH₃)₂, (CH₃)₂Si, (CH₃)₂Ge, (CH₃)₂Sn, (C₆H₅)₂Si, (C₆H₅) (CH₃)Si, (C₆H₅)₂Ge, (C₆H₅)₂Sn, (CH₂)₄Si, CH₂Si(CH₃)₂, o-C₆H₄ oder 2,2'-(C₆H₄)₂. Z kann auch mit einem oder mehreren Resten R¹⁰ und/oder R¹¹ ein mono- oder polycyclisches Ringsystem bilden.

Bevorzugt sind chirale verbrückte Metallocenverbindungen der Formel (III), insbesondere solche in denen v gleich 1 ist und einer oder beide Cyclopentadienylringe so substituiert sind, daß sie einen Indenylring darstellen. Der Indenylring ist bevorzugt substituiert, insbesondere in 2-, 4-, 2,4,5-, 2,4,6-, 2,4,7 oder 2,4,5,6-Stellung, mit C₁-C₂₀-kohlenstoffhaltigen Gruppen, wie C₁-C₁₀-Alkyl oder C₆-C₂₀-Aryl, wobei auch zwei oder mehrere Substituenten des Indenylrings zusammen ein Ringsystem bilden können. Chirale verbrückte Metallocenverbindungen der Formel (III) können als reine racemische oder reine meso Verbindungen eingesetzt werden. Es können aber auch Gemische aus einer racemischen Verbindung und einer meso Verbindung verwendet werden.

Beispiele für Metallocenverbindungen sind:
Dimethylsilandiylbis(indenyl)zirkoniumdichlorid
Dimethylsilandiylbis(4-naphthyl-indenyl)zirkoniumdichlorid
Dimethylsilandiylbis(2-methyl-benzo-indenyl)zirkoniumdichlorid
Dimethylsilandiylbis(2-methyl-indenyl)zirkoniumdichlorid
Dimethylsilandiylbis(2-methyl-4-(1-naphthyl)-indenyl)zirkoniumdichlorid
Dimethylsilandiylbis(2-methyl-4-(2-naphthyl)-indenyl)zirkoniumdichlorid
Dimethylsilandiylbis(2-methyl-4-phenyl-indenyl)zirkoniumdichlorid
Dimethylsilandiylbis (2-methyl-4-t-butyl-indenyl) zirkoniumdichlorid
Dimethylsilandiylbis(2-methyl-4-isopropyl-indenyl)zirkoniumdichlorid
Dimethylsilandiylbis (2-methyl-4-ethyl-indenyl) zirkoniumdichlorid
Dimethylsilandiyibis (2-methyl-4-acenaphth-indenyl) zirkoniumdichlorid
Dimethylsilandiylbis(2,4-dimethyl-indenyl)zirkoniumdichlorid
Dimethylsilandiylbis(2-ethyl-indenyl)zirkoniumdichlorid
Dimethylsilandiylbis(2-ethyl-4-ethyl-indenyl)zirkoniumdichlorid
Dimethylsilandiylbis(2-ethyl-4-phenyl-indenyl)zirkoniumdichlorid
Dimethylsilandiybis(2-methyl-4,5-benzo-indenyl)zirkoniumdichlorid
Dimethylsilandiylbis(2-methyl-4,6 diisopropyl-indenyl)zirkoniumdichlorid
Dimethylsilandiylbis (2-methyl-4, 5 diisopropyl-indenyl) zirkoniumdichlorid
Dimethylsilandiylbis (2,4,6-trimethyl-indenyl) zirkoniumdichlorid
Dimethylsilandiylbis(2,5,6-trimethyl-indenyl)zirkoniumdichlorid
Dimethylsilandiylbis(2,4,7-trimethyl-indenyl)zirkoniumdichlorid
Dimethylsilandiylbis(2-methyl-5-isobutyl-indenyl)zirkoniumdichlorid
Dimethylsilandiylbis (2-methyl-5-t-butyl-indenyl) zirkoniumdichlorid
Methyl(phenyl)silandiylbis(2-methyl-4-phenyl-indenyl)zirkoniumdichlorid
Methyl(phenyl)silandiylbis(2-methyl-4,6 diisopropyl-indenyl)zirkoniumdichlorid
Methyl(phenyl)silandiylbis(2-methyl-4-isopropyl-indenyl)zirkoniumdichlorid
Methyl(phenyl)silandiylbis(2-methyl-4,5-benzo-indenyl)zirkoniumdichlorid
Methyl(phenyl)silandiylbis(2-methyl-4,5-(methylbenzo)-indenyl)zirkoniumdi-chlorid
Methyl(phenyl)silandiylbis(2-methyl-4,5-(tetramethylbenzo)-indenyl)zirkoniumdichlorid
Methyl(phenyl)silandiylbis(2-methyl-4- -acenaphth-indenyl) zirkoniumdichlorid
Methyl (phenyl) silandiylbis (2-methyl-indenyl) zirkoniumdichlorid
Methyl(phenyl)silandiylbis(2-methyl-5-isobutyl-indenyl)zirkoniumdichlorid
1,2-Ethandiylbis(2-methyl-4-phenyl-indenyl)zirkoniumdichlorid
1,4-Butandiylbis(2-methyl-4-phenyl-indenyl)zirkoniumdichlorid
1,2-Ethandiylbis(2-methyl-4,6 diisopropyl-indenyl)zirkoniumdichlorid
1,4-Butandiylbis(2-methyl-4-isopropyl-indenyl)zirkoniumdichlorid
1,4-Butandiylbis(2-methyl-4,5-benzo-indenyl)zirkoniumdichlorid
1,2-Ethandiylbis(2-methyl-4,5-benzo-indenyl)zirkoniumdichlorid
1,2-Ethandiylbis(2,4,7-trimethyl-indenyl)zirkoniumdichlorid
1,2-Ethandiylbis(2-methyl-indenyl)zirkoniumdichlorid
1,4-Butandiylbis(2-methyl-indenyl)zirkoniumdichlorid
(4-(η⁵-Cyclopentadienyl)-4,6,6-trimethyl-(η⁵-4,5-tetrahydropentalen)]-dichlorozirconium
(4-(η⁵-3'-Trimethylsilyl-cyclopentadienyl)-4,6,6-trimethyl- (η⁵-4, 5-tetrahydropentalen)]-dichlorozirconium
[4-(η⁵-3'-Isopropyl-cyclopentadienyl)-4,6,6-trimethyl-(η⁵-4,5-tetrahydropentalen)-dichlorozirconium
[4-(η⁵-Cyclopentadienyl)-4,7,7-trimethyl-(η⁵-4,5,6,7-tetrahydroindenyl)]-dichlorotitan
[4-(η⁵-Cyclopentadienyl)-4,7,7-trimethyl-(η⁵-4,5,6,7-tetrahydroindenyl)]-dichlorozirkonium
[4-(η⁵-Cyclopentadienyl)-4,7,7-trimethyl-(η⁵-4,5,6,7-tetrahydroindenyl)]-dichlorohafnium
[4-(η⁵-3'-tert.Butyl-cyclopentadienyl)-4,7,7-trimethyl-(η⁵-4,5,6,7-tetrahydroindenyl)]-dichlorotitan
4-(η⁵-3'-Isopropylcyclopentadienyl)-4,7,7-trimethyl-(η⁵-4,5,6,7-tetrahydroindenyl)]-dichlorotitan
4-(η⁵-3'-Methylcyclopentadienyl)-4,7,7-trimethyl-(η⁵-4,5,6,7-tetrahydroindenyl)]-dichlorotitan
4-(η⁵-3'-Trimethylsilyl-cyclopentadienyl)-2-trimethylsilyl-4,7,7-trimethyl-(η⁵-4,5,6,7-tetrahydroindenyl)]-dichlorotitan
4-(η⁵-3'-tert.Butyl-cyclopentadienyl)-4,7,7-trimethyl-(η⁵-4,5,6,7-tetrahydroindenyl)]-dichlorozirkonium
(Tertbutylamido)-(tetramethyl-η⁵-cyclopentadienyl)-dimethylsilyldichlorotitan
(Tertbutylamido)-(tetramethyl-η⁵-cyclopentadienyl)-1,2-ethandiyldichlorotitan-dichlorotitan
(Methylamido)-(tetramethyl-η⁵-cyclopentadienyl)-dimethylsilyldichlorotitan
(Methylamido)-(tetramethyl-η⁵-cyclopentadienyl)-1,2-ethandiyldichlorotitan
(Tertbutylamido)-(2,4-dimethyl-2,4-pentadien-1-yl)-dimethylsilyldichlorotitan
Bis-(cyclopentadienyl)-zirkoniumdichlorid
Bis-(n-butylcyclopentadienyl)-zirkoniumdichlorid
Bis-(1,3-dimethylcyclopentadienyl)-zirkoniumdichlorid
Tetrachloro-[1-[bis(η⁵-1H-inden-1-yliden)methylsilyl]-3-η⁵-cyclopenta-2,4-dien-1-yliden)-3-η⁵-9H-fluoren-9-yliden)butan]di-zirkonium
Tetrachloro-[2-[bis(η⁵-2-methyl-1H-inden-1-yliden)methoxysilyl] -5- (η⁵-2, 3, 4, 5-tetramethylcyclopenta-2, 4-dien-1-yliden)-5-(η⁵-9H-fluoren-9-yliden)hexan]di-zirkonium
Tetrachloro- [1- [bis (η⁵-1H-inden-1-yliden)methylsilyl] -6-(η⁵-cyclopenta-2,4-dien-1-yliden)-6-(η⁵-9H-fluoren-9-yliden)-3-oxaheptan]di-zirkonium
Dimethylsilandiylbis(2-methyl-4-(tert-butyl-phenyl-indenyl)-zirkoniumdichlorid
Dimethylsilandiylbis(2-methyl-4-(4-methyl-phenyl-indenyl)zirkoniumdichlorid
Dimethylsilandiylbis(2-methyl-4-(4-ethyl-phenyl-indenyl)zirkoniumdichlorid
Dimethylsilandiylbis(2-methyl-4-(4-trifluormethyl-phenyl-indenyl)zirkoniumdichlorid
Dimethylsilandiylbis(2-methyl-4-(4-methoxy-phenyl-indenyl)zirkoniumdichlorid
Dimethylsilandiylbis(2-ethyl-4-(4-tert-butyl-phenyl-indenyl)zirkoniumdichlorid
Dimethylsilandiylbis(2-ethyl-4-(4-methyl-phenyl-indenyl)zirkoniumdichlorid
Dimethylsilandiylbis (2-ethyl-4- (4-ethyl-phenyl-indenyl) zirkoniumdichlorid
Dimethylsilandiylbis(2-ethyl-4-(4-trifluormethyl-phenyl-indenyl)zirkoniumdichlorid
Dimethylsilandiylbis(2-ethyl-4-(4-methoxy-phenyl-indenyl)zirkoniumdichlorid
Dimethylsilandiylbis(2-methyl-4-(4-tert-butyl-phenyl-indenyl)zirkoniumdimethyl
Dimethylsilandiylbis(2-methyl-4-(4-methyl-phenyl-indenyl)zirkoniumdimethyl
Dimethylsilandiylbis(2-methyl-4-(4-ethyl-phenyl-indenyl)zirkoniumdimethyl
Dimethylsilandiylbis(2-methyl-4-(4-trifluormethyl-phenyl-indenyl)zirkoniumdimethyl
Dimethylsilandiylbis(2-methyl-4-(4-methoxy-phenyl-indenyl)zirkoniumdimethyl
Dimethylsilandiylbis(2-ethyl-4-(4-tert-butyl-phenyl-indenyl)zirkoniumdimethyl
Dimethylsilandiylbis(2-ethyl-4-(4-methyl-phenyl-indenyl)zirkoniumdimethyl
Dimethylsilandiylbis(2-ethyl-4-(4-ethyl-phenyl-indenyl)zirkoniumdiethyl
Dimethylsilandiylbis(2-ethyl-4-(4-trifluormethyl-phenyl-indenyl)zirkoniumdimethyl
Dimethylsilandiylbis(2-ethyl-4-(4-methoxy-phenyl-indenyl)zirkoniumdimethyl
Dimethylsilandiylbis(2-methyl-4-(4'-tert.-butyl-phenyl)-indenyl)zirkoniumdichlorid
Dimethylsilandiylbis(2-methyl-4-(4'-tert.-butyl-phenyl)-indenyl)hafnuimdichlorid
Dimethylsilandiylbis(2-methyl-4-(4'-tert.-butyl-phenyl)-indenyl) titandichlorid
Dimethylsilandiylbis(2-methyl-4-(4'-methyl-phenyl)-indenyl)zirkoniumdichlorid
Dimethylsilandiylbis(2-methyl-4-(4'-n-propyl-phenyl)-indenyl)zirkoniumdichlorid
Dimethylsilandiylbis(2-methyl-4-(4'-n-butyl-phenyl)-indenyl)zirkoniumdichlorid
Dimethylsilandiylbis(2-methyl-4-(4'-hexyl-phenyl)-indenyl)zirkoniumdichlorid
Dimethylsilandiylbis(2-methyl-4-(4'-sec-butyl-phenyl)-indenyl)zirkoniumdichlorid
Dimethylsilandiylbis(2-ethyl-4-phenyl)-indenyl)zirkoniumdichlorid
Dimethylsilandiylbis(2-ethyl-4-(4'-methyl-phenyl)-indenyl)zirkoniumdichlorid
Dimethylsilandiylbis(2-ethyl-4-(4'-ethyl-phenyl)-indenyl)zirkoniumdichlorid
Dimethylsilandiylbis(2-ethyl-4-(4'-n-propyl-phenyl)-indenyl)zirkoniumdichlorid
Dimethylsilandiylbis(2-ethyl-4-(4'-n-butyl-phenyl)-indenyl)zirkoniumdichlorid
Dimethylsilandiylbis(2-ethyl-4-(4'-hexyl-phenyl)-indenyl)zirkoniumdichlorid
Dimethylsilandiylbis(2-ethyl-4-(4'-pentyl-phenyl)-indenyl)zirkoniumdichlorid
Dimethylsilandiylbis(2-ethyl-4-(4'-cyclohexyl-phenyl)-indenyl)zirkoniumdichlorid
Dimethylsilandiylbis(2-ethyl-4-(4'-sec-butyl-phenyl)-indenyl)zirkoniumdichlorid
Dimethylsilandiylbis(2-ethyl-4-(4'-tert.-butyl-phenyl)-indenyl)zirkoniumdichlorid
Dimethylsilandiylbis(2-n-propyl-4-phenyl)-indenyl)zirkoniumdichlorid
Dimethylsilandiylbis(2-n-propyl-4-(4'-methyl-phenyl)-indenyl)zirkoniumdichlorid
Dimethylsilandiylbis(2-n-propyl-4-(4'-ethyl-phenyl)-indenyl)zirkoniumdichlorid
Dimethylsilandiylbis(2-n-propyl-4-(4'-iso-propyl-phenyl)-indenyl)zirkoniumdichlorid
Dimethylsilandiylbis(2-n-propyl-4-(4'-n-butyl-phenyl)-indenyl)zirkoniumdichlorid
Dimethylsilandiylbis(2-n-propyl-4-(4'-hexyl-phenyl)-indenyl)zirkoniumdichlorid
Dimethylsilandiylbis (2-n-propyl-4-(4'-cyclohexyl-phenyl)-indenyl)zirkoniumdichlorid
Dimethylsilandiylbis(2-n-propyl-4-(4'-sec-butyl-phenyl)-indenyl)zirkoniumdichlorid
Dimethylsilandiylbis(2-n-propyl-4-(4'-tert.-butyl-phenyl)-indenyl)zirkoniumdichlorid
Dimethylsilandiylbis(2-n-butyl-4-phenyl)-indenyl)zirkoniumdichlorid
Dimethylsilandiylbis(2-n-butyl-4-(4'-methyl-phenyl)-indenyl)zirkoniumdichlorid
Dimethylsilandiylbis(2-n-butyl-4-(4'-ethyl-phenyl)-indenyl)zirkoniumdichlorid
Dimethylsilandiylbis(2-n-butyl-4-(4'-n-propyl-phenyl)-indenyl)zirkoniumdichlorid
Dimethylsilandiylbis(2-n-butyl-4-(4'-iso-propyl-phenyl)-indenyl)zirkoniumdichlorid
Dimethylsilandiylbis(2-n-butyl-4-(4'-n-butyl-phenyl)-indenyl)zirkoniumdichlorid
Dimethylsilandiylbis(2-n-butyl-4-(4'-hexyl-phenyl)-indenyl)zirkoniumdichlorid
Dimethylsilandiylbis(2-n-butyl-4-(4'-cyclohexyl-phenyl)-indenyl)zirkoniumdichlorid
Dimethylsilandiylbis (2-n-butyl-4-(4'-sec-butyl-phenyl)-indenyl)zirkoniumdichlorid
Dimethylsilandiylbis(2-n-butyl-4-(4'-tert.-butyl-phenyl)-indenyl)zirkoniumdichlorid
Dimethylsilandiylbis(2-hexyl-4-phenyl)-indenyl)zirkoniumdichlorid
Dimethylsilandiylbis(2-hexyl-4-(4'-methyl-phenyl)-indenyl)zirkoniumdichlorid
Dimethylsilandiylbis(2-hexyl-4-(4'-ethyl-phenyl)-indenyl)zirkoniumdichlorid
Dimethylsilandiylbis(2-hexyl-4-(4'-n-propyl-phenyl)-indenyl)zirkoniumdichlorid
Dimethylsilandiylbis(2-hexyl-4-(4'-iso-propyl-phenyl)-indenyl)zirkoniumdichlorid
Dimethylsilandiylbis(2-hexyl-4-(4'-n-butyl-phenyl)-indenyl)zirkoniumdichlorid
Dimethylsilandiylbis(2-hexyl-4-(4'-hexyl-phenyl)-indenyl)zirkoniumdichlorid
Dimethylsilandiylbis(2-hexyl-4-(4'-cyclohexyl-phenyl)-indenyl)zirkoniumdichlorid
Dimethylsilandiylbis(2-hexyl-4-(4'-sec-butyl-phenyl)-indenyl)zirkoniumdichlorid
Dimethylsilandiylbis(2-hexyl-4-(4'-tert.-butyl-phenyl)-indenyl)zirkoniumdichlorid
Dimethylsilandiylbis(2-methyl-4-(4'-tert.-butyl-phenyl)-indenyl) zirkoniumbis (dimethylamid)
Dimethylsilandiylbis(2-ethyl-4-(4'-tert.-butyl-phenyl)-indenyl)zirkoniumdibenzyl
Dimethylsilandiylbis(2-methyl-4-(4'-tert.-butyl-phenyl)-indenyl) zirkoniumdimethyl
Dimethylgermandiylbis(2-ethyl-4-(4'-tert.-butyl-phenyl)-indenyl)zirkoniumdichlorid
Dimethylgermandiylbis(2-ethyl-4-(4'-tert.-butyl-phenyl)-indenyl)hafniumdichlorid
Dimethylgermandiylbis(2-propyl-4-(4'-tert.-butyl-phenyl)-indenyl)titandichlorid
Dimethylgermandiylbis(2-methyl-4-(4'-tert.-butyl-phenyl)-indenyl)zirkoniumdichlorid
Ethylidenbis(2-ethyl-4-phenyl)-indenyl)zirkoniumdichlorid
Ethylidenbis(2-ethyl-4-(4'-tert.-butyl-phenyl)-indenyl)zirkoniumdichlorid
Ethylidenbis(2-n-propyl-4-(4'-tert.-butyl-phenyl)-indenyl)zirkoniumdichlorid
Ethylidenbis(2-n-butyl-4-(4'-tert.-butyl-phenyl)-indenyl)titandichlorid
Ethylidenbis(2-hexyl-4-(4'-tert.-butyl-phenyl)-indenyl)zirkoniumdibenzyl
Ethylidenbis(2-ethyl-4-(4'-tert.-butyl-phenyl)-indenyl)hafniumdibenzyl
Ethylidenbis(2-methyl-4-(4'-tert.-butyl-phenyl)-indenyl)titandibenzyl
Ethylidenbis(2-methyl-4-(4'-tert.-butyl-phenyl)-indenyl)zirkoniumdichlorid
Ethylidenbis(2-ethyl-4-(4'-tert.-butyl-phenyl)-indenyl)hafniumdimethyl
Ethylidenbis(2-n-propyl-4--phenyl)-indenyl)titandimethyl
Ethylidenbis(2-ethyl-4-(4'-tert.-butyl-phenyl)-indenyl)zirkoniumbis(dimethylamid)
Ethylidenbis(2-ethyl-4-(4'-tert.-butyl-phenyl)-indenyl)hafniumbis(dimethylamid)
Ethylidenbis(2-ethyl-4-(4'-tert.-butyl-phenyl)-indenyl)titanbis(dimethylamid)
Methylethylidenbis(2-ethyl-4-(4'-tert.-butyl-phenyl)-indenyl)zirkoniumdichlorid
Methylethylidenbis(2-ethyl-4-(4'-tert.-butyl-phenyl)-indenyl)hafniumdichlorid
Phenylphosphandiyl(2-ethyl-4-(4'-tert.-butyl-phenyl)-indenyl)zirkoniumdichlorid
Phenylphosphandiyl(2-methyl-4-(4'-tert.-butyl-phenyl)-indenyl) zirkoniumdichlorid
Phenylphosphandiyl(2-ethyl-4-(4'-tert.-butyl-phenyl)-indenyl) zirkoniumdichlorid
Dimethylsilandiyl(2-methyl-4-azapentalen)(2-methyl-4-(4'-methylphenyl-indenyl) zirkoniumdichlorid
Dimethylsilandiyl(2-methyl-5-azapentalen)(2-methyl-4-(4'-methylphenyl-indenyl) zirkoniumdichlorid
Dimethylsilandiyl(2-methyl-6-azapentalen)(2-methyl-4-(4'-methylphenyl-indenyl) zirkoniumdichlorid
Dimethylsilandiyl(2-methyl-N-phenyl-4-azapentalen)(2-methyl-4-(4'-methylphenyl-indenyl) zirkoniumdichlorid
Dimethylsilandiyl(2-methyl-N-phenyl-5-azapentalen)(2-methyl-4-(4'-methylphenyl-indenyl) zirkoniumdichlorid
Dimethylsilandiyl(2-methyl-N-phenyl-6-azapentalen)(2-methyl-4-(4'-methylphenyl-indenyl) zirkoniumdichlorid
Dimethylsilandiyl(2,5-dimethyl-4-azapentalen)(2-methyl-4-(4'-methylphenyl-indenyl) zirkoniumdichlorid
Dimethylsilandiyl(2,5-dimethyl-6-azapentalen)(2-methyl-4-(4'-methylphenyl-indenyl) zirkoniumdichlorid
Dimethylsilandiyl(2,5-dimethyl-N-phenyl-4-azapentalen)(2-methyl-4-(4'-methylphenyl-indenyl) zirkoniumdichlorid
Dimethylsilandiyl(2, 5-dimethyl-N-phenyl-6-azapentalen) (2-methyl-4-(4'-methylphenyl-indenyl) zirkoniumdichlorid
Dimethylsilandiyl (2-methyl-4-thiapentalen) (2-methyl-4-(4'-methylphenyl-indenyl)zirkoniumdichlorid
Dimethylsilandiyl(2-methyl-5-thiapentalen)(2-methyl-4-(4'-methylphenyl-indenyl)zirkoniumdichlorid
Dimethylsilandiyl(2-methyl-6-thiapentalen)(2-methyl-4-(4'-methylphenyl-indenyl)zirkoniumdichlorid
Dimethylsilandiyl(2,5-dimethyl-4-thiapentalen)(2-methyl-4-(4'-methylphenyl-indenyl) zirkoniumdichlorid
Dimethylsilandiyl(2,5-dimethyl-6-thiapentalen)(2-methyl-4-(4'-methylphenyl-indenyl) zirkoniumdichlorid
Dimethylsilandiyl(2-methyl-4-oxapentalen)(2-methyl-4-(4'-methylphenyl-indenyl)zirkoniumdichlorid
Dimethylsilandiyl(2-methyl-5-oxapentalen)(2-methyl-4-(4'-methylphenyl-indenyl)zirkoniumdichlorid
Dimethylsilandiyl(2-methyl-6-oxapentalen)(2-methyl-4-(4'-methylphenyl-indenyl)zirkoniumdichlorid
Dimethylsilandiyl(2,5-dimethyl-4-oxapentalen)(2-methyl-4-(4'-methylphenyl-indenyl) zirkoniumdichlorid
Dimethylsilandiyl(2,5-dimethyl-6-oxapentalen)(2-methyl-4-(4'-methylphenyl-indenyl) zirkoniumdichlorid
Dimethylsilandiyl(2-methyl-4-azapentalen)(2-methyl-4-(4'-ethylphenyl-indenyl) zirkoniumdichlorid
Dimethylsilandiyl(2-methyl-5-azapentalen)(2-methyl-4-(4'-ethylphenyl-indenyl) zirkoniumdichlorid
Dimethylsilandiyl(2-methyl-6-azapentalen)(2-methyl-4-(4'-ethylphenyl-indenyl) zirkoniumdichlorid
Dimethylsilandiyl(2-methyl-N-phenyl-4-azapentalen)(2-methyl-4-(4'-ethylphenyl-indenyl) zirkoniumdichlorid
Dimethylsilandiyl(2-methyl-N-phenyl-6-azapentalen)(2-methyl-4-(4'-ethylphenyl-indenyl) zirkoniumdichlorid
Dimethylsilandiyl (2-methyl-N-phenyl-6-azapentalen) (2-methyl-4-(4'-ethylphenyl-indenyl) zirkoniumdichlorid
Dimethylsilandiyl(2,5-dimethyl-4-azapentalen)(2-methyl-4-(4'-ethylphenyl-indenyl) zirkoniumdichlorid
Dimethylsilandiyl(2,5-dimethyl-6-azapentalen)(2-methyl-4-(4'-ethylphenyl-indenyl) zirkoniumdichlorid
Dimethylsilandiyl(2,5-dimethyl-N-phenyl-4-azapentalen)(2-methyl-4-(4'-ethylphenyl-indenyl) zirkoniumdichlorid
Dimethylsilandiyl (2,5-dimethyl-N-phenyl-6-azapentalen) (2-methyl-4-(4'-ethylphenyl-indenyl) zirkoniumdichlorid
Dimethylsilandiyl(2-methyl-4-thiapentalen)(2-methyl-4-(4'-ethylphenyl-indenyl)zirkoniumdichlorid
Dimethylsilandiyl(2-methyl-5-thiapentalen)(2-methyl-4-(4'-ethylphenyl-indenyl)zirkoniumdichlorid
Dimethylsilandiyl(2-methyl-6-thiapentalen)(2-methyl-4-(4'-ethylphenyl-indenyl)zirkoniumdichlorid
Dimethylsilandiyl(2,5-dimethyl-4-thiapentalen)(2-methyl-4-(4'-ethylphenyl-indenyl) zirkoniumdichlorid
Dimethylsilandiyl(2,5-dimethyl-6-thiapentalen)(2-methyl-4-(4'-ethylphenyl-indenyl) zirkoniumdichlorid
Dimethylsilandiyl(2-methyl-4-oxapentalen)(2-methyl-4-(4'-ethylphenyl-indenyl)zirkoniumdichlorid
Dimethylsilandiyl (2-methyl-5-oxapentalen) (2-methyl-4-(4'-ethylphenyl-indenyl) zirkoniumdichlorid
Dimethylsilandiyl(2-methyl-6-oxapentalen)(2-methyl-4-(4'-ethylphenyl-indenyl) zirkoniumdichlorid
Dimethylsilandiyl(2,5-dimethyl-4-oxapentalen)(2-methyl-4-(4'-ethylphenyl-indenyl) zirkoniumdichlorid
Dimethylsilandiyl(2,5-dimethyl-6-oxapentalen) (2-methyl-4-(4'-ethylphenyl-indenyl) zirkoniumdichlorid
Dimethylsilandiyl(2-methyl-4-azapentalen) (2-methyl-4-(4'-n-propylphenyl-indenyl) zirkoniumdichlorid
Dimethylsilandiyl(2-methyl-5-azapentalen) (2-methyl-4-(4'-n-propylphenyl-indenyl) zirkoniumdichlorid
Dimethylsilandiyl (2-methyl-6-azapentalen) (2-methyl-4-(4'-n-propylphenyl-indenyl) zirkoniumdichlorid
Dimethylsilandiyl(2-methyl-N-phenyl-4-azapentalen)(2-methyl-4-(4'-n-propylphenyl-indenyl) zirkoniumdichlorid
Dimethylsilandiyl(2-methyl-N-phenyl-5-azapentalen)(2-methyl-4-(4'-n-propylphenyl-indenyl) zirkoniumdichlorid
Dimethylsilandiyl(2-methyl-N-phenyl-6-azapentalen)(2-methyl-4-(4'-n-propylphenyl-indenyl) zirkoniumdichlorid
Dimethylsilandiyl(2,5-dimethyl-4-azapentalen)(2-methyl-4-(4'-n-propylphenyl-indenyl) zirkoniumdichlorid
Dimethylsilandiyl(2,5-dimethyl-6-azapentalen)(2-methyl-4-(4'-n-propylphenyl-indenyl) zirkoniumdichlorid
Dimethylsilandiyl(2,5-dimethyl-N-phenyl-4-azapentalen)(2-methyl-4-(4'-n-propylphenyl-indenyl) zirkoniumdichlorid
Dimethylsilandiyl(2,5-dimethyl-N-phenyl-6-azapentalen)(2-methyl-4-(4'-n-propylphenyl-indenyl) zirkoniumdichlorid
Dimethylsilandiyl(2-methyl-4-thiapentalen)(2-methyl-4-(4'-n-propylphenyl-indenyl)zirkoniumdichlorid
Dimethylsilandiyl(2-methyl-5-thiapentalen)(2-methyl-4-(4'-n-propylphenyl-indenyl)zirkoniumdichlorid
Dimethylsilandiyl(2-methyl-6-thiapentalen)(2-methyl-4-(4'-n-propylphenyl-indenyl)zirkoniumdichlorid
Dimethylsilandiyl(2,5-dimethyl-4-thiapentalen)(2-methyl-4-(4'-n-propylphenyl-indenyl) zirkoniumdichlorid
Dimethylsilandiyl(2,5-dimethyl-6-thiapentalen)(2-methyl-4-(4'-n-propylphenyl-indenyl) zirkoniumdichlorid
Dimethylsilandiyl(2-methyl-4-oxapentalen) (2-methyl-4-(4'-n-propylphenyl-indenyl)zirkoniumdichlorid
Dimethylsilandiyl (2-methyl-5-oxapentalen) (2-methyl-4-(4'-n-propylphenyl-indenyl)zirkoniumdichlorid
Dimethylsilandiyl(2-methyl-6-oxapentalen)(2-methyl-4-(4'-n-propylphenyl-indenyl)zirkoniumdichlorid
Dimethylsilandiyl(2,5-dimethyl-4-oxapentalen)(2-methyl-4-(4'-n-propylphenyl-indenyl) zirkoniumdichlorid .
Dimethylsilandiyl(2,5-dimethyl-6-oxapentalen)(2-methyl-4-(4'-n-propylphenyl-indenyl) zirkoniumdichlorid
Dimethylsilandiyl(2-methyl-4-azapentalen)(2-methyl-a-(4'-isopropylphenyl-indenyl) zirkoniumdichlorid
Dimethylsilandiyl(2-methyl-5-azapentalen)(2-methyl-4-(4'-isopropylphenyl-indenyl) zirkoniumdichlorid
Dimethylsilandiyl(2-methyl-6-azapentalen)(2-methyl-4-(4'-isopropylphenyl-indenyl) zirkoniumdichlorid
Dimethylsilandiyl(2-methyl-N-phenyl-4-azapentalen)(2-methyl-4-(4'-isopropylphenyl-indenyl) zirkoniumdichlorid
Dimethylsilandiyl(2-methyl-N-phenyl-5-azapentalen)(2-methyl-4-(4'-isopropylphenyl-indenyl) zirkoniumdichlorid
Dimethylsilandiyl (2-methyl-N-phenyl-6-azapentalen) (2-methyl-4-(4'-isopropylphenyl-indenyl) zirkoniumdichlorid
Dimethylsilandiyl(2,5-dimethyl-4-azapentalen)(2-methyl-4-(4'-isopropylphenyl-indenyl) zirkoniumdichlorid
Dimethylsilandiyl(2,5-dimethyl-6-azapentalen)(2-methyl-4-(4'-isopropylphenyl-indenyl) zirkoniumdichlorid
Dimethylsilandiyl(2,5-dimethyl-N-phenyl-4-azapentalen)(2-methyl-4-(4'-isopropylphenyl-indenyl) zirkoniumdichlorid
Dimethylsilandiyl(2,5-dimethyl-N-phenyl-6-azapentalen)(2-methyl-4-(4'-isopropylphenyl-indenyl) zirkoniumdichlorid
Dimethylsilandiyl(2-methyl-4-thiapentalen)(2-methyl-4-(4'-isopropylphenyl-indenyl)zirkoniumdichlorid
Dimethylsilandiyl (2-methyl-5-thiapentalen) (2-methyl-4- (4'-isopropylphenyl-indenyl)zirkoniumdichlorid
Dimethylsilandiyl(2-methyl-6-thiapentalen)(2-methyl-4-(4'-isopropylphenyl-indenyl)zirkoniumdichlorid
Dimethylsilandiyl(2,5-dimethyl-4-thiapentalen)(2-methyl-4-(4'-isopropylphenyl-indenyl) zirkoniumdichlorid
Dimethylsilandiyl(2,5-dimethyl-6-thiapentalen)(2-methyl-4-(4'-isopropylphenyl-indenyl) zirkoniumdichlorid
Dimethylsilandiyl(2-methyl-4-oxapentalen)(2-methyl-4-(4'-isopropylphenyl-indenyl)zirkoniumdichlorid
Dimethylsilandiyl(2-methyl-5-oxapentalen)(2-methyl-4-(4'-isopropylphenyl-indenyl)zirkoniumdichlorid
Dimethylsilandiyl(2-methyl-6-oxapentalen)(2-methyl-4-(4'-isopropylphenyl-indenyl)zirkoniumdichlorid
Dimethylsilandiyl(2,5-dimethyl-4-oxapentalen)(2-methyl-4-(4'-isopropylphenyl-indenyl) zirkoniumdichlorid
Dimethylsilandiyl(2,5-dimethyl-6-oxapentalen)(2-methyl-4-(4'-isopropylphenyl-indenyl) zirkoniumdichlorid
Dimethylsilandiyl(2-methyl-4-azapentalen)(2-methyl-4-(4'-n-butylphenyl-indenyl) zirkoniumdichlorid
Dimethylsilandiyl(2-methyl-5-azapentalen)(2-methyl-4-(4'-n-butylphenyl-indenyl) zirkoniumdichlorid
Dimethylsilandiyl(2-methyl-6-azapentalen)(2-methyl-4-(4'-n-butylphenyl-indenyl) zirkoniumdichlorid
Dimethylsilandiyl(2-methyl-N-phenyl-4-azapentalen)(2-methyl-4-(4'-n-butylphenyl-indenyl) zirkoniumdichlorid
Dimethylsilandiyl (2-methyl-N-phenyl-5-azapentalen) (2-methyl-4-(4'-n-butylphenyl-indenyl) zirkoniumdichlorid
Dimethylsilandiyl(2-methyl-N-phenyl-6-azapentalen) (2-methyl-4-(4'-n-butylphenyl-indenyl) zirkoniumdichlorid
Dimethylsilandiyl (2,5-dimethyl-4-azapentalen) (2-methyl-4-(4'-n-butylphenyl-indenyl) zirkoniumdichlorid
Dimethylsilandiyl(2,5-dimethyl-6-azapentalen)(2-methyl-4-(4'-n-butylphenyl-indenyl) zirkoniumdichlorid
Dimethylsilandiyl(2,5-dimethyl-N-phenyl-4-azapentalen)(2-methyl-4-(4'-n-butylphenyl-indenyl) zirkoniumdichlorid
Dimethylsilandiyl (2,5-dimethyl-N-phenyl-6-azapentalen) (2-methyl-4-(4'-n-butylphenyl-indenyl) zirkoniumdichlorid
Dimethylsilandiyl(2-methyl-4-thiapentalen)(2-methyl-4-(4'-n-butylphenyl-indenyl)zirkoniumdichlorid
Dimethylsilandiyl(2-methyl-5-thiapentalen)(2-methyl-4-(4'-n-butylphenyl-indenyl) zirkoniumdichlorid
Dimethylsilandiyl(2-methyl-6-thiapentalen)(2-methyl-4-(4'-n-butylphenyl-indenyl)zirkoniumdichlorid
Dimethylsilandiyl(2,5-dimethyl-4-thiapentalen)(2-methyl-4-(4'-n-butylphenyl-indenyl) zirkoniumdichlorid
Dimethylsilandiyl(2,5-dimethyl-6-thiapentalen)(2-methyl-4-(4'-n-butylphenyl-indenyl) zirkoniumdichlorid
Dimethylsilandiyl(2-methyl-4-oxapentalen) (2-methyl-4-(4'-n-butylphenyl-indenyl)zirkoniumdichlorid
Dimethylsilandiyl(2-methyl-5-oxapentalen)(2-methyl-4-(4'-n-butylphenyl-indenyl)zirkoniumdichlorid
Dimethylsilandiyl(2-methyl-6-oxapentalen)(2-methyl-4-(4'-n-butylphenyl-indenyl)zirkoniumdichlorid
Dimethylsilandiyl(2,5-dimethyl-4-oxapentalen)(2-methyl-4-(4'-n-butylphenyl-indenyl) zirkoniumdichlorid
Dimethylsilandiyl(2,5-dimethyl-6-oxapentalen)(2-methyl-4-(4'-n-butylphenyl-indenyl) zirkoniumdichlorid
Dimethylsilandiyl(2-methyl-4-azapentalen)(2-methyl-4-(4'-s-butylphenyl-indenyl) zirkoniumdichlorid
Dimethylsilandiyl(2-methyl-5-azapentalen)(2-methyl-4-(4'-s-butylphenyl-indenyl) zirkoniumdichlorid
Dimethylsilandiyl(2-methyl-6-azapentalen)(2-methyl-4-(4'-s-butylphenyl-indenyl) zirkoniumdichlorid
Dimethylsilandiyl(2-methyl-N-phenyl-4-azapentalen)(2-methyl-4-(4'-s-butylphenyl-indenyl) zirkoniumdichlorid
Dimethylsilandiyl(2-methyl-N-phenyl-5-azapentalen)(2-methyl-4-(4'-s-butylphenyl-indenyl) zirkoniumdichlorid
Dimethylsilandiyl(2-methyl-N-phenyl-6-azapentalen)(2-methyl-4-(4'-s-butylphenyl-indenyl) zirkoniumdichlorid
Dimethylsilandiyl(2,5-dimethyl-4-azapentalen)(2-methyl-4-(4'-s-butylphenyl-indenyl) zirkoniumdichlorid
Dimethylsilandiyl(2,5-dimethyl-6-azapentalen)(2-methyl-4-(4'-s-butylphenyl-indenyl) zirkoniumdichlorid
Dimethylsilandiyl(2,5-dimethyl-N-phenyl-4-azapentalen)(2-methyl-4-(4'-s-butylphenyl-indenyl) zirkoniumdichlorid
Dimethylsilandiyl(2,5-dimethyl-N-phenyl-6-azapentalen)(2-methyl-4-(4'-s-butylphenyl-indenyl) zirkoniumdichlorid
Dimethylsilandiyl(2-methyl-4-thiapentalen)(2-methyl-4-(4'-s-butylphenyl-indenyl)zirkoniumdichlorid
Dimethylsilandiyl(2-methyl-5-thiapentalen)(2-methyl-4-(4'-s-butylphenyl-indenyl)zirkoniumdichlorid
Dimethylsilandiyl(2-methyl-6-thiapentalen)(2-methyl-4-(4'-s-butylphenyl-indenyl)zirkoniumdichlorid
Dimethylsilandiyl(2,5-dimethyl-4-thiapentalen)(2-methyl-4-(4'-s-butylphenyl-indenyl) zirkoniumdichlorid
Dimethylsilandiyl(2,5-dimethyl-6-thiapentalen)(2-methyl-4-(4'-s-butylphenyl-indenyl) zirkoniumdichlorid
Dimethylsilandiyl(2-methyl-4-oxapentalen) (2-methyl-4-(4'-s-butylphenyl-indenyl)zirkoniumdichlorid
Dimethylsilandiyl (2-methyl-5-oxapentalen) (2-methyl-4-(4'-s-butylphenyl-indenyl)zirkoniumdichlorid
Dimethylsilandiyl (2-methyl-6-oxapentalen) (2-methyl-4-(4'-s-butylphenyl-indenyl)zirkoniumdichlorid
Dimethylsilandiyl (2,5-dimethyl-4-oxapentalen)(2-methyl-4-(4'-s-butylphenyl-indenyl) zirkoniumdichlorid
Dimethylsilandiyl(2,5-dimethyl-6-oxapentalen)(2-methyl-4-(4'-s-butylphenyl-indenyl) zirkoniumdichlorid
Dimethylsilandiyl(2-methyl-4-azapentalen)(2-methyl-4-(4'-tert-butylphenyl-indenyl) zirkoniumdichlorid
Dimethylsilandiyl(2-methyl-5-azapentalen)(2-methyl-4-(4'-tert-butylphenyl-indenyl) zirkoniumdichlorid
Dimethylsilandiyl(2-methyl-6-azapentalen) (2-methyl-4-(4'-tert-butylphenyl-indenyl) zirkoniumdichlorid
Dimethylsilandiyl(2-methyl-N-phenyl-4-azapentalen)(2-methyl-4-(4'-tert-butylphenyl-indenyl) zirkoniumdichlorid
Dimethylsilandiyl(2-methyl-N-phenyl-5-azapentalen)(2-methyl-4-(4'-tert-butylphenyl-indenyl) zirkoniumdichlorid
Dimethylsilandiyl(2-methyl-N-phenyl-6-azapentalen)(2-methyl-4-(4'-tert-butylphenyl-indenyl) zirkoniumdichlorid
Dimethylsilandiyl(2,5-dimethyl-4-azapentalen)(2-methyl-4-(4'-tert-butylphenyl-indenyl) zirkoniumdichlorid
Dimethylsilandiyl(2,5-dimethyl-6-azapentalen)(2-methyl-4-(4'-tert-butylphenyl-indenyl) zirkoniumdichlorid
Dimethylsilandiyl(2,5-dimethyl-N-phenyl-4-azapentalen)(2-methyl-4-(4'-tert-butylphenyl-indenyl) zirkoniumdichlorid
Dimethylsilandiyl(2,5-dimethyl-N-phenyl-6-azapentalen)(2-methyl-4-(4'-tert-butylphenyl-indenyl) zirkoniumdichlorid
Dimethylsilandiyl(2-methyl-4-thiapentalen)(2-methyl-4-(4'-tertbutylphenyl-indenyl)zirkoniumdichlorid
Dimethylsilandiyl(2-methyl-5-thiapentalen)(2-methyl-4-(4'-tertbutylphenyl-indenyl)zirkoniumdichlorid
Dimethylsilandiyl(2-methyl-6-thiapentalen)(2-methyl-4-(4'-tertbutylphenyl-indenyl)zirkoniumdichlorid
Dimethylsilandiyl(2,5-dimethyl-4-thiapentalen)(2-methyl-4-(4'-tert-butylphenyl-indenyl) zirkoniumdichlorid
Dimethylsilandiyl(2,5-dimethyl-6-thiapentalen)(2-methyl-4-(4'-tert-butylphenyl-indenyl) zirkoniumdichlorid
Dimethylsilandiyl(2-methyl-4-oxapentalen)(2-methyl-4-(4'-tert-butylphenyl-indenyl)zirkoniumdichlorid
Dimethylsilandiyl(2-methyl-5-oxapentalen)(2-methyl-4-(4'-tert-butylphenyl-indenyl)zirkoniumdichlorid
Dimethylsilandiyl(2-methyl-6-oxapentalen) (2-methyl-4-(4'-tert-butylphenyl-indenyl)zirkoniumdichlorid
Dimethylsilandiyl(2,5-dimethyl-4-oxapentalen)(2-methyl-4-(4'-tert-butylphenyl-indenyl) zirkoniumdichlorid
Dimethylsilandiyl(2,5-dimethyl-6-oxapentalen)(2-methyl-4-(4'-tert-butylphenyl-indenyl) zirkoniumdichlorid
Dimethylsilandiyl(2-methyl-4-azapentalen)(2-methyl-4-(4'-n-pentylphenyl-indenyl) zirkoniumdichlorid
Dimethylsilandiyl(2-methyl-5-azapentalen)(2-methyl-4-(4'-n-pentylphenyl-indenyl) zirkoniumdichlorid
Dimethylsilandiyl(2-methyl-6-azapentalen)(2-methyl-4-(4'-n-pentylphenyl-indenyl) zirkoniumdichlorid
Dimethylsilandiyl(2-methyl-N-phenyl-4-azapentalen)(2-methyl-4-(4'-n-pentylphenyl-indenyl) zirkoniumdichlorid
Dimethylsilandiyl(2-methyl-N-phenyl-5-azapentalen)(2-methyl-4-(4'-n-pentylphenyl-indenyl) zirkoniumdichlorid
Dimethylsilandiyl(2-methyl-N-phenyl-6-azapentalen)(2-methyl-4-(4'-n-pentylphenyl-indenyl) zirkoniumdichlorid
Dimethylsilandiyl(2,5-dimethyl-4-azapentalen)(2-methyl-4-(4'-n-pentylphenyl-indenyl) zirkoniumdichlorid
Dimethylsilandiyl(2,5-dimethyl-6-azapentalen)(2-methyl-4-(4'-n-pentylphenyl-indenyl) zirkoniumdichlorid
Dimethylsilandiyl (2,5-dimethyl-N-phenyl-4-azapentalen) (2-methyl-4-(4'-n-pentylphenyl-indenyl) zirkoniumdichlorid
Dimethylsilandiyl(2,5-dimethyl-N-phenyl-6-azapentalen)(2-methyl-4-(4'-n-pentylphenyl-indenyl) zirkoniumdichlorid
Dimethylsilandiyl(2-methyl-4-thiapentalen)(2-methyl-a-(4'-n-pentylphenyl-indenyl)zirkoniumdichlorid
Dimethylsilandiyl(2-methyl-5-thiapentalen)(2-methyl-4-(4'-n-pentylphenyl-indenyl) zirkoniumdichlorid
Dimethylsilandiyl(2-methyl-6-thiapentalen)(2-methyl-4-(4'-n-pentylphenyl-indenyl)zirkoniumdichlorid
Dimethylsilandiyl(2,5-dimethyl-4-thiapentalen)(2-methyl-4- (4'-n-pentylphenyl-indenyl) zirkoniumdichlorid
Dimethylsilandiyl(2,5-dimethyl-6-thiapentalen)(2-methyl-4-(4'-n-pentylphenyl-indenyl) zirkoniumdichlorid
Dimethylsilandiyl(2-methyl-4-oxapentalen)(2-methyl-4-(4'-n-pentylphenyl-indenyl)zirkoniumdichlorid
Dimethylsilandiyl(2-methyl-5-oxapentalen)(2-methyl-4-(4'-n-pentylphenyl-indenyl)zirkoniumdichlorid
Dimethylsilandiyl(2-methyl-6-oxapentalen)(2-methyl-4-(4'-n-pentylphenyl-indenyl)zirkoniumdichlorid
Dimethylsilandiyl(2,5-dimethyl-4-oxapentalen)(2-methyl-4- (4'-n-pentylphenyl-indenyl) zirkoniumdichlorid
Dimethylsilandiyl(2,5-dimethyl-6-oxapentalen)(2-methyl-4-(4'-n-pentylphenyl-indenyl) zirkoniumdichlorid
Dimethylsilandiyl(2-methyl-4-azapentalen)(2-methyl-4-(4'-n-hexylphenyl-indenyl) zirkoniumdichlorid
Dimethylsilandiyl(2-methyl-5-azapentalen) (2-methyl-4-(4'-n-hexylphenyl-indenyl) zirkoniumdichlorid
Dimethylsilandiyl (2-methyl-6-azapentalen) (2-methyl-4-(4'-n-hexylphenyl-indenyl) zirkoniumdichlorid
Dimethylsilandiyl(2-methyl-N-phenyl-4-azapentalen)(2-methyl-4-(4'-n-hexylphenyl-indenyl) zirkoniumdichlorid
Dimethylsilandiyl(2-methyl-N-phenyl-5-azapentalen)(2-methyl-4-(4'-n-hexylphenyl-indenyl) zirkoniumdichlorid
Dimethylsilandiyl(2-methyl-N-phenyl-6-azapentalen)(2-methyl-4-(4'-n-hexylphenyl-indenyl) zirkoniumdichlorid
Dimethylsilandiyl(2,5-dimethyl-4-azapentalen)(2-methyl-4-(4'-n-hexylphenyl-indenyl) zirkoniumdichlorid
Dimethylsilandiyl(2,5-dimethyl-6-azapentalen)(2-methyl-4-(4'-n-hexylphenyl-indenyl) zirkoniumdichlorid
Dimethylsilandiyl(2,5-dimethyl-N-phenyl-4-azapentalen)(2-methyl-4-(4'-n-hexylphenyl-indenyl) zirkoniumdichlorid
Dimethylsilandiyl(2,5-dimethyl-N-phenyl-6-azapentalen)(2-methyl-4-(4'-n-hexylphenyl-indenyl) zirkoniumdichlorid
Dimethylsilandiyl(2-methyl-4-thiapentalen)(2-methyl-4-(4'-n-hexylphenyl-indenyl)zirkoniumdichlorid
Dimethylsilandiyl(2-methyl-5-thiapentalen)(2-methyl-4-(4'-n-hexylphenyl-indenyl)zirkoniumdichlorid
Dimethylsilandiyl(2-methyl-6-thiapentalen)(2-methyl-4-(4'-n-hexylphenyl-indenyl)zirkoniumdichlorid
Dimethylsilandiyl(2,5-dimethyl-4-thiapentalen)(2-methyl-4-(4'-n-hexylphenyl-indenyl) zirkoniumdichlorid
Dimethylsilandiyl-(2,5-dimethyl-6-thiapentalen)(2-methyl-4-(4'-n-hexylphenyl-indenyl) zirkoniumdichlorid
Dimethylsilandiyl(2-methyl-4-oxapentalen)(2-methyl-4-(4'-n-hexylphenyl-indenyl)zirkoniumdichlorid
Dimethylsilandiyl(2-methyl-5-oxapentalen)(2-methyl-4-(4'-n-hexylphenyl-indenyl)zirkoniumdichlorid
Dimethylsilandiyl(2-methyl-6-oxapentalen)(2-methyl-4-(4'-n-hexylphenyl-indenyl)zirkoniumdichlorid
Dimethylsilandiyl(2,5-dimethyl-4-oxapentalen)(2-methyl-4-(4'-n-hexylphenyl-indenyl) zirkoniumdichlorid
Dimethylsilandiyl(2,5-dimethyl-6-oxapentalen)(2-methyl-4-(4'-n-hexylphenyl-indenyl) zirkoniumdichlorid
Dimethylsilandiyl(2-methyl-4-azapentalen)(2-methyl-4-(4'-cyclohexylphenyl-indenyl) zirkoniumdichlorid
Dimethylsilandiyl(2-methyl-5-azapentalen)(2-methyl-4-(4'-cyclohexylphenyl-indenyl) zirkoniumdichlorid
Dimethylsilandiyl(2-methyl-6-azapentalen)(2-methyl-4-(4'-cyclohexylphenyl-indenyl) zirkoniumdichlorid
Dimethylsilandiyl(2-methyl-N-phenyl-4-azapentalen)(2-methyl-4-(4'-cyclohexylphenyl-indenyl) zirkoniumdichlorid
Dimethylsilandiyl(2-methyl-N-phenyl-5-azapentalen)(2-methyl-4-(4'-cyclohexylphenyl-indenyl) zirkoniumdichlorid
Dimethylsilandiyl(2-methyl-N-phenyl-6-azapentalen)(2-methyl-4-(4'-cyclohexylphenyl-indenyl) zirkoniumdichlorid
Dimethylsilandiyl(2,5-dimethyl-4-azapentalen)(2-methyl-4-(4'-cyclohexylphenyl-indenyl) zirkoniumdichlorid
Dimethylsilandiyl(2,5-dimethyl-6-azapentalen)(2-methyl-4-(4'-cyclohexylphenyl-indenyl) zirkoniumdichlorid
Dimethylsilandiyl(2,5-dimethyl-N-phenyl-4-azapentalen)(2-methyl-4-(4'-cyclohexylphenyl-indenyl) zirkoniumdichlorid
Dimethylsilandiyl(2,5-dimethyl-N-phenyl-6-azapentalen)(2-methyl-4-(4'-cyclohexylphenyl-indenyl) zirkoniumdichlorid
Dimethylsilandiyl(2-methyl-4-thiapentalen)(2-methyl-4-(4'-cyclohexylphenyl-indenyl)zirkoniumdichlorid
Dimethylsilandiyl(2-methyl-5-thiapentalen)(2-methyl-4-(4'-cyclohexylphenyl-indenyl)zirkoniumdichlorid
Dimethylsilandiyl(2-methyl-6-thiapentalen)(2-methyl-4-(4'-cyclohexylphenyl-indenyl)zirkoniumdichlorid
Dimethylsilandiyl(2,5-dimethyl-4-thiapentalen)(2-methyl-4-(4'-cyclohexylphenyl-indenyl) zirkoniumdichlorid
Dimethylsilandiyl(2,5-dimethyl-6-thiapentalen)(2-methyl-4-(4'-cyclohexylphenyl-indenyl) zirkoniumdichlorid
Dimethylsilandiyl(2-methyl-4-oxapentalen)(2-methyl-4-(4'-cyclohexylphenyl-indenyl)zirkoniumdichlorid
Dimethylsilandiyl(2-methyl-5-oxapentalen)(2-methyl-4-(4'-cyclohexylphenyl-indenyl)zirkoniumdichlorid
Dimethylsilandiyl(2-methyl-6-oxapentalen)(2-methyl-4-(4'-cyclohexylphenyl-indenyl)zirkoniumdichlorid
Dimethylsilandiyl(2,5-dimethyl-4-oxapentalen)(2-methyl-4-(4'-cyclohexylphenyl-indenyl) zirkoniumdichlorid
Dimethylsilandiyl(2,5-dimethyl-6-oxapentalen)(2-methyl-4-(4'-cyclohexylphenyl-indenyl) zirkoniumdichlorid
Dimethylsilandiyl(2-methyl-4-azapentalen)(2-methyl-4-(4'-trimethylsilylphenyl-indenyl) zirkoniumdichlorid
Dimethylsilandiyl(2-methyl-5-azapentalen)(2-methyl-4-(4'-trimethylsilylphenyl-indenyl) zirkoniumdichlorid
Dimethylsilandiyl(2-methyl-6-azapentalen)(2-methyl-4-(4'-trimethylsilylphenyl-indenyl) zirkoniumdichlorid
Dimethylsilandiyl(2-methyl-N-phenyl-4-azapentalen)(2-methyl-4-(4'-trimethylsilylphenyl-indenyl) zirkoniumdichlorid
Dimethylsilandiyl(2-methyl-N-phenyl-5-azapentalen) (2-methyl-4-(4'-trimethylsilylphenyl-indenyl) zirkoniumdichlorid
Dimethylsilandiyl(2-methyl-N-phenyl-6-azapentalen)(2-methyl-4-(4'-trimethylsilylphenyl-indenyl) zirkoniumdichlorid
Dimethylsilandiyl (2, 5-dimethyl-4-azapentalen) (2-methyl-4-(4'-trimethylsilylphenyl-indenyl) zirkoniumdichlorid
Dimethylsilandiyl(2,5-dimethyl-6-azapentalen) (2-methyl-4-(4'-trimethylsilylphenyl-indenyl) zirkoniumdichlorid
Dimethylsilandiyl(2,5-dimethyl-N-phenyl-4-azapentalen)(2-methyl-4-(4'-trimethylsilylphenyl-indenyl) zirkoniumdichlorid
Dimethylsilandiyl(2,5-dimethyl-N-phenyl-6-azapentalen)(2-methyl-4-(4'-trimethylsilylphenyl-indenyl) zirkoniumdichlorid
Dimethylsilandiyl(2-methyl-4-thiapentalen)(2-methyl-4-(4'-trimethylsilylphenyl-indenyl)zirkoniumdichlorid
Dimethylsilandiyl(2-methyl-5-thiapentalen)(2-methyl-4-(4'-trimethylsilylphenyl-indenyl)zirkoniumdichlorid
Dimethylsilandiyl(2-methyl-6-thiapentalen)(2-methyl-4-(4'-trimethylsilylphenyl-indenyl)zirkoniumdichlorid
Dimethylsilandiyl(2,5-dimethyl-4-thiapentalen)(2-methyl-4-(4'-trimethylsilylphenyl-indenyl) zirkoniumdichlorid
Dimethylsilandiyl(2,5-dimethyl-6-thiapentalen)(2-methyl-4-(4'-trimethylsilylphenyl-indenyl) zirkoniumdichlorid
Dimethylsilandiyl(2-methyl-4-oxapentalen) (2-methyl-4-(4'-trimethylsilylphenyl-indenyl)zirkoniumdichlorid
Dimethylsilandiyl(2-methyl-5-oxapentalen)(2-methyl-4-(4'-trimethylsilylphenyl-indenyl)zirkoniumdichlorid
Dimethylsilandiyl(2-methyl-6-oxapentalen) (2-methyl-4-(4'-trimethylsilylphenyl-indenyl)zirkoniumdichlorid
Dimethylsilandiyl(2,5-dimethyl-4-oxapentalen)(2-methyl-4-(4'-trimethylsilylphenyl-indenyl) zirkoniumdichlorid
Dimethylsilandiyl(2,5-dimethyl-6-oxapentalenl(2-methyl-4-(4'-trimethylsilylphenyl-indenyl) zirkoniumdichlorid
Dimethylsilandiyl(2-methyl-4-azapentalen)(2-methyl-4-(4'-adamantylphenyl-indenyl) zirkoniumdichlorid
Dimethylsilandiyl(2-methyl-5-azapentalen)(2-methyl-4-(4'-adamantylphenyl-indenyl) zirkoniumdichlorid .
Dimethylsilandiyl(2-methyl-6-azapentalen)(2-methyl-4-(4'-adamantylphenyl-indenyl) zirkoniumdichlorid
Dimethylsilandiyl(2-methyl-N-phenyl-4-azapentalen)(2-methyl-4-(4'-adamantylphenyl-indenyl) zirkoniumdichlorid
Dimethylsilandiyl(2-methyl-N-phenyl-5-azapentalen)(2-methyl-4-(4'-adamantylphenyl-indenyl) zirkoniumdichlorid
Dimethylsilandiyl(2-methyl-N-phenyl-6-azapentalen)(2-methyl-4-(4'-adamantylphenyl-indenyl) zirkoniumdichlorid
Dimethylsilandiyl(2,5-dimethyl-4-azapentalen)(2-methyl-4-(4'-adamantylphenyl-indenyl) zirkoniumdichlorid
Dimethylsilandiyl(2,5-dimethyl-6-azapentalen)(2-methyl-4-(4'-adamantylphenyl-indenyl) zirkoniumdichlorid
Dimethylsilandiyl(2,5-dimethyl-4-azapentalen)(2-methyl-4-(4'-adamantylphenyl-indenyl) zirkoniumdichlorid
Dimethylsilandiyl (2, 5-dimethyl-N-phenyl-4-azapentalen) (2-methyl-4-(4'-adamantylphenyl-indenyl) zirkoniumdichlorid
Dimethylsilandiyl(2,5-dimethyl-N-phenyl-6-azapentalen)(2-methyl-4-(4'-adamantylphenyl-indenyl) zirkoniumdichlorid
Dimethylsilandiyl(2-methyl-4-thiapentalen)(2-methyl-4-(4'-adamantylphenyl-indenyl)zirkoniumdichlorid
Dimethylsilandiyl(2-methyl-5-thiapentalen)(2-methyl-4-(4'-adamantylphenyl-indenyl)zirkoniumdichlorid
Dimethylsilandiyl(2-methyl-6-thiapentalen)(2-methyl-4-(4'-adamantylphenyl-indenyl)zirkoniumdichlorid
Dimethylsilandiyl(2,5-dimethyl-4-thiapentalen)(2-methyl-4-(4'-adamantylphenyl-indenyl) zirkoniumdichlorid
Dimethylsilandiyl(2,5-dimethyl-6-thiapentalen)(2-methyl-4-(4'-adamantylphenyl-indenyl) zirkoniumdichlorid
Dimethylsilandiyl (2-methyl-4-oxapentalen) (2-methyl-4-(4'-adamantylphenyl-indenyl)zirkoniumdichlorid
Dimethylsilandiyl (2-methyl-5-oxapentalen) (2-methyl-4-(4'-adamantylphenyl-indenyl)zirkoniumdichlorid
Dimethylsilandiyl(2-methyl-6-oxapentalen)(2-methyl-4-(4'-adamantylphenyl-indenyl)zirkoniumdichlorid
Dimethylsilandiyl(2,5-dimethyl-4-oxapentalen)(2-methyl-4-(4'-adamantylphenyl-indenyl) zirkoniumdichlorid
Dimethylsilandiyl(2,5-dimethyl-6-oxapentalen)(2-methyl-4-(4'-adamantylphenyl-indenyl) zirkoniumdichlorid
Dimethylsilandiyl(2-methyl-4-azapentalen)(2-methyl-4-(4'-tris(trifluormethyl)methylphenyl-indenyl) zirkoniumdichlorid
Dimethylsilandiyl(2-methyl-5-azapentalen)(2-methyl-4-(4'-tris(trifluormethyl)methylphenyl-indenyl) zirkoniumdichlorid
Dimethylsilandiyl(2-methyl-6-azapentalen)(2-methyl-4-(4'-tris(trifluormethyl)methylphenyl-indenyl) zirkoniumdichlorid
Dimethylsilandiyl(2-methyl-N-phenyl-4-azapentalen)(2-methyl-4-(4'-tris(trifluormethyl)methylphenyl-indenyl) zirkoniumdichlorid
Dimethylsilandiyl(2-methyl-N-phenyl-5-azapentalen)(2-methyl-4-(4'-tris(trifluormethyl)methylphenyl-indenyl) zirkoniumdichlorid
Dimethylsilandiyl(2-methyl-N-phenyl-6-azapentalen)(2-methyl-4-(4'-tris(trifluormethyl)methylphenyl-indenyl) zirkoniumdichlorid
Dimethylsilandiyl(2,5-dimethyl-4-azapentalen)(2-methyl-4-(4'-tris(trifluormethyl)methylphenyl-indenyl) zirkoniumdichlorid
Dimethylsilandiyl(2,5-dimethyl-6-azapentalen)(2-methyl-4-(4'-tris(trifluormethyl)methylphenyl-indenyl) zirkoniumdichlorid
Dimethylsilandiyl(2,5-dimethyl-N-phenyl-4-azapentalen)(2-methyl-4-(4'-tris(trifluormethyl)methylphenyl-indenyl) zirkoniumdichlorid
Dimethylsilandiyl(2,5-dimethyl-N-phenyl-6-azapentalen)(2-methyl-4-(4'-tris(trifluormethyl)methylphenyl-indenyl) zirkoniumdichlorid
Dimethylsilandiyl(2-methyl-4-thiapentalen)(2-methyl-4-(4'-tris(trifluormethyl)methylphenyl-indenyl)zirkoniumdichlorid
Dimethylsilandiyl(2-methyl-5-thiapentalen)(2-methyl-4-(4'-tris(trifluormethyl)methylphenyl-indenyl)zirkoniumdichlorid
Dimethylsilandiyl(2-methyl-6-thiapentalen)(2-methyl-4-(4'-tris(trifluormethyl)methylphenyl-indenyl)zirkoniumdichlorid
Dimethylsilandiyl(2,5-dimethyl-4-thiapentalen)(2-methyl-4-(4'-tris(trifluormethyl)methylphenyl-indenyl) zirkoniumdichlorid
Dimethylsilandiyl(2,5-dimethyl-6-thiapentalen)(2-methyl-4-(4'-tris(trifluormethyl)methylphenyl-indenyl) zirkoniumdichlorid
Dimethylsilandiyl(2-methyl-4-oxapentalen)(2-methyl-4-(4'-tris(trifluormethyl)methylphenyl-indenyl)zirkoniumdichlorid
Dimethylsilandiyl(2-methyl-5-oxapentalen)(2-methyl-4-(4'-tris(trifluormethyl)methylphenyl-indenyl)zirkoniumdichlorid
Dimethylsilandiyl(2-methyl-6-oxapentalen)(2-methyl-4-(4'-tris(trifluormethyl)methylphenyl-indenyl)zirkoniumdichlorid
Dimethylsilandiyl(2,5-dimethyl-4-oxapentalen)(2-methyl-4-(4'-tris(trifluormethyl)methylphenyl-indenyl) zirkoniumdichlorid
Dimethylsilandiyl(2,5-dimethyl-6-oxapentalen)(2-methyl-4-(4'-tris(trifluormethyl)methylphenyl-indenyl) zirkoniumdichlorid
Dimethylsilandiyl(2-methyl-4-azapentalen)(2-ethyl-4-(4'-tert-butylphenyl-indenyl) zirkoniumdichlorid
Dimethylsilandiyl(2-methyl-5,6-di-hydro-4-azapentalen) (2-ethyl-4-(4'-tert-butylphenyl-indenyl) zirkoniumdichlorid
Dimethylsilandiyl(2-methyl-4-azapentalen)(2-ethyl-4-(4'-tert-butylphenyl-tetrahydroindenyl) zirkoniumdichlorid
Dimethylsilandiyl(2-methyl-5-azapentalen)(2-n-butyl-4-(4'-tertbutylphenyl-indenyl) zirkoniumdichlorid
Ethyliden(2-methyl-6-azapentalen)(2-methyl-4-(4'-tert-butylphenyl-indenyl) zirkoniumdichlorid
Dimethylsilandiyl(2-methyl-N-trimethylsilyl-4-azapentalen)(2-methyl-4-(4'-tert-butylphenyl-indenyl) zirkoniumdichlorid
Dimethylsilandiyl(2-methyl-N-tolyl-5-azapentalen) (2-n-propyl-4-(4'-tert-butylphenyl-indenyl) zirkoniumdichlorid
Dimethylgermyldiyl (2-methyl-N-phenyl-6-azapentalen) (2-methyl-4-(4'-tert-butylphenyl-indenyl) zirkoniumdichlorid
Methylethyliden(2,5-dimethyl-4-azapentalen)(2-methyl-4-(4'-tertbutylphenyl-indenyl) zirkoniumdichlorid
Dimethylsilandiyl(2,5-di-iso-propyl-6-azapentalen)(2-methyl-4-(4'-tert-butylphenyl-indenyl) zirkoniumdichlorid
Dimethylsilandiyl(2,5-dimethyl-N-phenyl-4-azapentalen) (2,6-dimethyl-4-(4'-tert-butylphenyl-indenyl) zirkoniumdichlorid
Dimethylsilandiyl(2,5-dimethyl-N-phenyl-6-azapentalen) (2-methyl-4-(6'-tert-butylnaphthyl-indenyl) zirkoniumdichlorid
Dimethylsilandiyl (2, 5-dimethyl-N-phenyl-6-azapentalen) (2-methyl-4-(6'-tert-butylanthracenyl-indenyl) zirkoniumdichlorid
Dimethylsilandiyl(2-methyl-4-phosphapentalen)(2-methyl-4-(4'-tert-butylphenyl-indenyl) zirkoniumdichlorid
Diphenylsilandiyl(2-methyl-5-thiapentalen) (2-methyl-4-(4'-tertbutylphenyl-indenyl)zirkoniumdichlorid
Methylphenylsilandiyl(2-methyl-6-thiapentalen)(2-methyl-4-(4'-tert-butylphenyl-indenyl)zirkoniumdichlorid
Methyliden(2,5-dimethyl-4-thiapentalen) (2-methyl-4-(4'-tert-butylphenyl-indenyl) zirkoniumdichlorid
Dimethylmethyliden (2,5-dimethyl-6-thiapentalen) (2-methyl-4-(4'-tert-butylphenyl-indenyl) zirkoniumdichlorid
Diphenylsilandiyl(2,5-dimethyl-4-oxapentalen)(2-methyl-4-(4'-tert-butylphenyl-indenyl) zirkoniumdichlorid
Diphenylsilandiyl(2,5-dimethyl-6-oxapentalen)(2-methyl-4-(4'-tert-butylphenyl-indenyl) zirkoniumdichlorid
Dimethylsilandiyl(2-methyl-4-azapentalen)(2-methylindenyl) zirkoniumdichlorid
Dimethylsilandiyl(2-methyl-5-azapentalen) (2-methylindenyl) zirkoniumdichlorid
Dimethylsilandiyl(2-methyl-6-azapentalen) (2-methylindenyl) zirkoniumdichlorid
Dimethylsilandiyl(2-methyl-N-phenyl-4-azapentalen)(2-methylindenyl) zirkoniumdichlorid
Dimethylsilandiyl(2-methyl-N-phenyl-5-azapentalen)(2-methylindenyl) zirkoniumdichlorid
Dimethylsilandiyl(2-methyl-N-phenyl-6-azapentalen)(2-methylindenyl) zirkoniumdichlorid
Dimethylsilandiyl (2, 5-dimethyl-4-azapentalen) (2-methylindenyl) zirkoniumdichlorid
Dimethylsilandiyl(2,5-dimethyl-6-azapentalen)(2-methylindenyl) zirkoniumdichlorid
Dimethylsilandiyl(2,5-dimethyl-N-phenyl-4-azapentalen)(2-methylindenyl) zirkoniumdichlorid
Dimethylsilandiyl(2,5-dimethyl-N-phenyl-6-azapentalen)(2-methylindenyl) zirkoniumdichlorid
Dimethylsilandiyl(2-methyl-4-thiapentalen)(2-methylindenyl)zirkoniumdichlorid
Dimethylsilandiyl(2-methyl-5-thiapentalen)(2-methylindenyl)zirkoniumdichlorid
Dimethylsilandiyl(2-methyl-6-thiapentalen)(2-methylindenyl)zirkoniumdichlorid
Dimethylsilandiyl(2,5-dimethyl-4-thiapentalen)(2-methylindenyl) zirkoniumdichlorid
Dimethylsilandiyl(2,5-dimethyl-6-thiapentalen)(2-methylindenyl) zirkoniumdichlorid
Dimethylsilandiyl(2-methyl-4-oxapentalen)(2-methylindenyl)zirkoniumdichlorid
Dimethylsilandiyl(2-methyl-5-oxapentalen)(2-methylindenyl)zirkoniumdichlorid
Dimethylsilandiyl (2-methyl-6-oxapentalen) (2-methylindenyl) zirkoniumdichlorid
Dimethylsilandiyl(2,5-dimethyl-4-oxapentalen)(2-methylindenyl) zirkoniumdichlorid
Dimethylsilandiyl(2,5-dimethyl-6-oxapentalen)(2-methylindenyl) zirkoniumdichlorid
Dimethylsilandiyl(2-methyl-4-azapentalen)(indenyl) zirkoniumdichlorid
Dimethylsilandiyl(2-methyl-5-azapentalen)(indenyl) zirkoniumdichlorid
Dimethylsilandiyl(2-methyl-6-azapentalen)(indenyl) zirkoniumdichlorid
Dimethylsilandiyl(2-methyl-N-phenyl-4-azapentalen)(indenyl) zirkoniumdichlorid
Dimethylsilandiyl(2-methyl-N-phenyl-5-azapentalen)(indenyl) zirkoniumdichlorid
Dimethylsilandiyl (2-methyl-N-phenyl-6-azapentalen) (indenyl) zirkoniumdichlorid
Dimethylsilandiyl(2, 5-dimethyl-4-azapentalen) (indenyl) zirkoniumdichlorid
Dimethylsilandiyl(2,5-dimethyl-6-azapentalen)(indenyl) zirkoniumdichlorid
Dimethylsilandiyl(2,5-dimethyl-N-phenyl-4-azapentalen)(indenyl) zirkoniumdichlorid
Dimethylsilandiyl(2,5-dimethyl-N-phenyl-6-azapentalen)(indenyl) zirkoniumdichlorid
Dimethylsilandiyl(2-methyl-4-thiapentalen)(indenyl)zirkoniumdichlorid
Dimethylsilandiyl(2-methyl-5-thiapentalen)(indenyl)zirkoniumdichlorid
Dimethylsilandiyl(2-methyl-6-thiapentalen)(indenyl)zirkoniumdichlorid
Dimethylsilandiyl(2,5-dimethyl-4-thiapentalen)(indenyl) zirkoniumdichlorid
Dimethylsilandiyl(2,5-dimethyl-6-thiapentalen)(indenyl) zirkoniumdichlorid
Dimethylsilandiyl(2-methyl-4-oxapentalen)(indenyl)zirkoniumdichlorid
Dimethylsilandiyl(2-methyl-5-oxapentalen) (indenyl) zirkoniumdichlorid
Dimethylsilandiyl(2-methyl-6-oxapentalen) (indenyl) zirkoniumdichlorid
Dimethylsilandiyl(2,5-dimethyl-4-oxapentalen)(indenyl) zirkoniumdichlorid
Dimethylsilandiyl(2,5-dimethyl-6-oxapentalen)(indenyl) zirkoniumdichlorid
Dimethylsilandiyl (2-methyl-4-azapentalen) (2-methyl-4-phenyl-indenyl) zirkoniumdichlorid
Dimethylsilandiyl(2-methyl-5-azapentalen)(2-methyl-4-phenyl-indenyl) zirkoniumdichlorid
Dimethylsilandiyl(2-methyl-6-azapentalen)(2-methyl-4-phenyl-indenyl) zirkoniumdichlorid
Dimethylsilandiyl(2-methyl-N-phenyl-4-azapentalen)(2-methyl-4-phenyl-indenyl) zirkoniumdichlorid
Dimethylsilandiyl(2-methyl-N-phenyl-5-azapentalen)(2-methyl-4-phenyl-indenyl) zirkoniumdichlorid
Dimethylsilandiyl(2-methyl-N-phenyl-6-azapentalen)(2-methyl-4-phenyl-indenyl) zirkoniumdichlorid
Dimethylsilandiyl(2,5-dimethyl-4-azapentalen)(2-methyl-4-phenylindenyl) zirkoniumdichlorid
Dimethylsilandiyl(2,5-dimethyl-6-azapentalen)(2-methyl-4-phenylindenyl) zirkoniumdichlorid
Dimethylsilandiyl(2,5-dimethyl-N-phenyl-4-azapentalen)(2-methyl-4-phenyl-indenyl) zirkoniumdichlorid
Dimethylsilandiyl(2,5-dimethyl-N-phenyl-6-azapentalen)(2-methyl-4-phenyl-indenyl) zirkoniumdichlorid
Dimethylsilandiyl(2-methyl-4-thiapentalen)(2-methyl-4-phenyl-indenyl)zirkoniumdichlorid
Dimethylsilandiyl(2-methyl-5-thiapentalen)(2-methyl-4-phenyl-indenyl)zirkoniumdichlorid
Dimethylsilandiyl (2-methyl-6-thiapentalen) (2-methyl-4-phenyl-indenyl)zirkoniumdichlorid
Dimethylsilandiyl(2,5-dimethyl-4-thiapentalen)(2-methyl-4-phenylindenyl) zirkoniumdichlorid
Dimethylsilandiyl(2,5-dimethyl-6-thiapentalen)(2-methyl-4-phenylindenyl) zirkoniumdichlorid
Dimethylsilandiyl(2-methyl-4-oxapentalen)(2-methyl-4-phenyl-indenyl)zirkoniumdichlorid
Dimethylsilandiyl(2-methyl-5-oxapentalen)(2-methyl-4-phenyl-indenyl)zirkoniumdichlorid
Dimethylsilandiyl(2-methyl-6-oxapentalen)(2-methyl-4-phenyl-indenyl)zirkoniumdichlorid
Dimethylsilandiyl(2,5-dimethyl-4-oxapentalen)(2-methyl-4-phenylindenyl) zirkoniumdichlorid
Dimethylsilandiyl(2,5-dimethyl-6-oxapentalen)(2-methyl-4-phenylindenyl) zirkoniumdichlorid
Dimethylsilandiyl(2-methyl-4-azapentalen)(2-methyl-4,5-benzo-indenyl) zirkoniumdichlorid
Dimethylsilandiyl(2-methyl-5-azapentalen)(2-methyl-4,5-benzo-indenyl) zirkoniumdichlorid
Dimethylsilandiyl(2-methyl-6-azapentalen)(2-methyl-4,5-benzo-indenyl) zirkoniumdichlorid
Dimethylsilandiyl (2-methyl-N-phenyl-4-azapentalen) (2-methyl-4,5-benzo-indenyl) zirkoniumdichlorid
Dimethylsilandiyl (2-methyl-N-phenyl-5-azapentalen) (2-methyl-4,5-benzo-indenyl) zirkoniumdichlorid
Dimethylsilandiyl (2-methyl-N-phenyl-6-azapentalen) (2-methyl-4,5-benzo-indenyl) zirkoniumdichlorid
Dimethylsilandiyl(2,5-dimethyl-4-azapentalen)(2-methyl-4,5-benzoindenyl) zirkoniumdichlorid
Dimethylsilandiyl(2,5-dimethyl-6-azapentalen)(2-methyl-4,5-benzoindenyl) zirkoniumdichlorid
Dimethylsilandiyl(2,5-dimethyl-N-phenyl-4-azapentalen)(2-methyl-4,5-benzo-indenyl) zirkoniumdichlorid
Dimethylsilandiyl(2,5-dimethyl-N-phenyl-6-azapentalen)(2-methyl-4,5-benzo-indenyl) zirkoniumdichlorid
Dimethylsilandiyl(2-methyl-4-thiapentalen)(2-methyl-4,5-benzo-indenyl)zirkoniumdichlorid
Dimethylsilandiyl(2-methyl-5-thiapentalen)(2-methyl-4,5-benzo-indenyl)zirkoniumdichlorid
Dimethylsilandiyl(2-methyl-6-thiapentalen)(2-methyl-4,5-benzo-indenyl)zirkoniumdichlorid
Dimethylsilandiyl(2,5-dimethyl-4-thiapentalen)(2-methyl-4,5-benzo-indenyl) zirkoniumdichlorid
Dimethylsilandiyl(2,5-dimethyl-6-thiapentalen)(2-methyl-4,5-benzo-indenyl) zirkoniumdichlorid
Dimethylsilandiyl(2-methyl-4-oxapentalen)(2-methyl-4,5-benzo-indenyl)zirkoniumdichlorid
Dimethylsilandiyl(2-methyl-5-oxapentalen)(2-methyl-4,5-benzo-indenyl)zirkoniumdichlorid
Dimethylsilandiyl(2-methyl-6-oxapentalen)(2-methyl-4,5-benzo-indenyl)zirkoniumdichlorid
Dimethylsilandiyl(2,5-dimethyl-4-oxapentalen)(2-methyl-4,5-benzoindenyl) zirkoniumdichlorid
Dimethylsilandiyl(2,5-dimethyl-6-oxapentalen)(2-methyl-4,5-benzoindenyl) zirkoniumdichlorid
Dimethylsilandiylbis(2-methyl-4-azapentalen)zirkoniumdichlorid
Dimethylsilandiylbis(2-methyl-5-azapentalen) zirkoniumdichlorid
Dimethylsilandiylbis(2-methyl-6-azapentalen) zirkoniumdichlorid
Dimethylsilandiylbis(2-methyl-N-phenyl-4-azapentalen) zirkoniumdichlorid
Dimethylsilandiylbis(2-methyl-N-phenyl-5-azapentalen) zirkoniumdichlorid
Dimethylsilandiylbis(2-methyl-N-phenyl-6-azapentalen) zirkoniumdichlorid
Dimethylsilandiylbis (2,5-dimethyl-4-azapentalen) zirkoniumdichlorid
Dimethylsilandiylbis(2,5-dimethyl-6-azapentalen) zirkoniumdichlorid
Dimethylsilandiylbis(2,5-dimethyl-N-phenyl-4-azapentalen) zirkoniumdichlorid
Dimethylsilandiylbis(2,5-dimethyl-N-phenyl-6-azapentalen) zirkoniumdichlorid
Dimethylsilandiylbis(2-methyl-4-thiapentalen)zirkoniumdichlorid
Dimethylsilandiylbis(2-methyl-5-thiapentalen)zirkoniumdichlorid
Dimethylsilandiylbis(2-methyl-6-thiapentalen)zirkoniumdichlorid
Dimethylsilandiylbis (2,5-dimethyl-4-thiapentalen) zirkoniumdichlorid
Dimethylsilandiylbis(2,5-dimethyl-6-thiapentalen)zirkoniumdichlorid
Dimethylsilandiylbis (2-methyl-4-oxapentalen) zirkoniumdichlorid
Dimethylsilandiylbis (2-methyl-5-oxapentalen) zirkoniumdichlorid
Dimethylsilandiylbis(2-methyl-6-oxapentalen)zirkoniumdichlorid
Dimethylsilandiylbis(2,5-dimethyl-4-oxapentalen)zirkoniumdichlorid
Dimethylsilandiylbis(2,5-dimethyl-6-oxapentalen)zirkoniumdichlorid

Des weiteren sind die Metallocene, bei denen das Zirkoniumfragment "-zirkonium-dichlorid" die Bedeutungen
Zirkonium-monochloro-mono-(2,4-di-tert.-butyl-phenolat)
Zirkonium-monochloro-mono-(2,6-di-tert.-butyl-phenolat)
Zirkonium-monochloro-mono-(3,5-di-tert.-butyl-phenolat)
Zirkonium-monochloro-mono-(2,6-di-sec.-butyl-phenolat)
Zirkonium-monochloro-mono-(2,4-di-methylphenolat)
Zirkonium-monochloro-mono-(2,3-di-methylphenolat)
Zirkonium-monochloro-mono-(2,5-di-methylphenolat)
Zirkonium-monochloro-mono-(2,6-di-methylphenolat)
Zirkonium-monochloro-mono-(3,4-di-methylphenolat)
Zirkonium-monochloro-mono-(3,5-di-methylphenolat)
Zirkonium-monochloro-monophenolat
Zirkonium-monochloro-mono-(2-methylphenolat)
Zirkonium-monochloro-mono-(3-methylphenolat)
Zirkonium-monochloro-mono-(4-methylphenolat)
Zirkonium-monochloro-mono-(2-ethylphenolat)
Zirkonium-monochloro-mono-(3-ethylphenolat)
Zirkonium-monochloro-mono-(4-ethylphenolat)
Zirkonium-monochloro-mono-(2-sec.-butylphenolat)
Zirkonium-monochloro-mono-(2-tert.-butylphenolat)
Zirkonium-monochloro-mono-(3-tert.-butylphenolat)
Zirkonium-monochloro-mono-(4-sec.-butylphenolat)
Zirkonium-monochloro-mono-(4-tert.-butylphenolat)
Zirkonium-monochloro-mono-(2-isopropyl-5-methylphenolat)
Zirkonium-monochloro-mono-(4-isopropyl-3-methylphenolat)
Zirkonium-monochloro-mono-(5-isopropyl-2-methylphenolat)
Zirkonium-monochloro-mono-(5-isopropyl-3-methylphenolat)
Zirkonium-monochloro-mono-(2,4-bis-(2-methyl-2-butyl)-phenolat)
Zirkonium-monochloro-mono-(2,6-di-tert.-butyl-4-methyl-phenolat)
Zirkonium-monochloro-mono-(4-nonylphenolat)
Zirkonium-monochloro-mono-(1-naphtholat)
Zirkonium-monochloro-mono-(2-naphtholat)
Zirkonium-monochloro-mono-(2-phenylphenolat)
Zirkonium-monochloro-mono-(tert. butoxid)
Zirkonium-monochloro-mono-(N-methylanilid)
Zirkonium-monochloro-mono-(2-tert.-butylanilid)
Zirkonium-monochloro-mono-(tert.-butylamid)
Zirkonium-monochloro-mono-(di-iso.-propylamid)
Zirkonium-monochloro-mono-methyl
Zirkonium-monochloro-mono-benzyl
Zirkonium-monochloro-mono-neopentyl, hat, Beispiele für die erfindungsgemäßen Metallocene.

Weiterhin bevorzugt sind die entsprechenden Zirkondimethyl-Verbindungen, die entsprechenden Zirkon-η⁴-Butadien-Verbindungen, sowie die entsprechenden Verbindungen mit 1,2-(1-methyl-ethandiyl)-, 1,2-(1,1-dimethyl-ethandiyl)- und 1,2(1,2-dimethyl-ethandiyl)-Brücke.

Das erfindungsgemäße Katalysatorsystem kann zusätzlich noch eine Organometallverbindung der Formel (IV)

[M⁵R²⁰ₚ]_{q} (IV)

worin
- M⁵: ein Element der I., II. und III. Hauptgruppe des Periodensystems der Elemente ist, vorzugsweise Lithium, Magnesium und Aluminium, insbesondere Aluminium, ist
- R²⁰: gleich oder verschieden ein Wasserstoffatom, ein Halogenatom, eine C₁-C₄₀-kohlenstoffhaltige Gruppe wie eine C₁-C₂₀- Alkyl-, C₆-C₄₀-Aryl-, C₇-C₄₀-Aryl-alkyl oder C₇-C₄₀-Alkyl-aryl-Gruppe, bedeutet,
- p: eine ganze Zahl von 1 bis 3 und
- q: eine ganze Zahl von 1 bis 4 ist, enthalten.

Bei den Organometallverbindungen der Formel (IV) handelt es sich ebenfalls um neutrale Lewissäuren.

Beispiele für die bevorzugten Organometall-Verbindungen der Formel (IV) sind Trimethylaluminium, Triethylaluminium, Triisopropylaluminium, Trihexylaluminium, Trioctylaluminium, Tri-n-butylaluminium, Tri-n-propylaluminium, Triisoprenaluminium, Dimethylaluminiummonochlorid, Diethylaluminiummonochlorid, Diisobutylaluminiummonochlorid, Methylaluminiumsesquichlorid, Ethylaluminiumsesquichlorid, Dimethylaluminiumhydrid, Diethylaluminiumhydrid, Diisopropylaluminiumhydrid, Dimethylaluminium(trimethylsiloxid), Dimethylaluminium(triethylsiloxid), Phenylalan, Pentafluorphenylalan, o-Tolylalan.

Das erfindungsgemäße Katalysatorsystem ist erhältlich durch Umsetzung einer Lewis Base der Formel (I) und einer Organobor- oder Organoaluminiumverbindung, die aus Einheiten der Formel (II) aufgebaut ist, mit einem Träger. Anschließend erfolgt die Umsetzung mit einer Lösung oder Suspension aus einem oder mehreren Metallocenverbindungen der Formel (III) und optional einer oder mehrerer Organometallverbindungen der Formel (IV).

Die Aktivierung des Katalysatorsystems kann dadurch wahlweise vor dem Einschleusen in den Reaktor vorgenommen werden oder aber erst im Reaktor durchgeführt werden. Ferner wird ein Verfahren zur Herstellung von Polyolefinen beschrieben. Die Zugabe einer weiteren chemischen Verbindung, die als Additiv vor der Polymerisation zudosiert wird, kann zusätzlich von Vorteil sein.

Zur Herstellung des erfindungsgemäßen Katalysatorsystems wird das Trägermeterial in einem organischen Lösemittel suspendiert. Geeignete Lösemittel sind aromatische oder aliphatische Lösemittel, wie beispielsweise Hexan, Heptan, Toluol oder Xylol oder halogenierte Kohlenwasserstoffe, wie Methylenchlorid oder halogenierte aromatische Kohlenwasserstoffe wie o-Dichlorbenzol. Der Träger kann zuvor mit einer Verbindung der Formel (IV) vorbehandelt werden. Anschließend wird eine oder mehrere Verbindungen der Formel (I) zu dieser Suspension gegeben, wobei die Reaktionszeit zwischen 1 Minute und 48 Stunden liegen kann, bevorzugt ist eine Reaktionszeit zwischen 10 Minuten und 2 Stunden. Die Reaktionslösung kann isoliert und anschließend resuspendiert werden oder aber auch direkt mit einer cokatalytisch wirkenden Organoboroder Aluminiumverbindung, gemäß der Formel (II), umgesetzt werden. Die Reaktionszeit liegt dabei zwischen 1 Minute und 48 Stunden, wobei eine Reaktionszeit von zwischen 10 Minuten und 2 Stunden bevorzugt ist. Zur Herstellung des erfindungsgemäßen Katalysatorsystems kann eine oder mehrere Lewis-Basen der Formel (I) mit einer oder mehrerern cokatalytisch wirksamen Organobor- oder Aluminiumverbindung, gemäß der Formel (II), umgesetzt werden. Bevorzugt ist die Menge von 1 bis 4 Äquivalenten einer Lewis-Base der Formel (I) mit einem Äquivalent einer cokatalytisch wirksamen Verbindung. Besonders bevorzugt ist die Menge von einem Äquivalent einer Lewis-Base der Formel (I) mit einem Äquivalent einer cokatalytisch wirksamen Verbindung. Das Reaktionsprodukt dieser Umsetzung ist eine metalloceniumbildende Verbindung, die kovalent an das Trägermaterial fixiert ist. Es wird nachfolgend als modifiziertes Trägermaterial bezeichnet. Die Reaktionslösung wird anschließend filtriert und mit einem der oben genannten Lösemittel gewaschen. Danach wird das modifizierte Trägermaterial im Hochvakuum getrocknet. Die Zugabe der einzelnen Komponenten kann aber auch in jeder anderen Reihenfolge durchgeführt werden.

Das Aufbringen einer oder mehrerer Metallocenverbindungen vorzugsweise der Formel (III) und einer oder mehrerer Organometallverbindungen der Formel (IV) auf das modifizierte Trägermaterial geht vorzugsweise so vonstatten, daß eine oder mehrere Metallocenverbindungen der Formel (III) in einem oben beschriebenen Lösemittel gelöst bzw. suspendiert wird und anschließend eine oder mehrere Verbindungen der Formel (IV), die vorzugsweise ebenfalls gelöst bzw. suspendiert ist, umgesetzt werden. Das stöchiometrische Verhältnis an Metallocenverbindung der Formel (III) und einer Organometallverbindung der Formel (IV) beträgt 100 : 1 bis 10⁻⁴ : 1. Vorzugsweise beträgt das Verhältnis 1 : 1 bis 10-² : 1. Das modifizierte Trägermaterial kann entweder direkt im Polymerisationsreaktor oder in einem Reaktionskolben in einem oben genannten Lösemittel vorgelegt werden. Anschließend erfolgt die Zugabe der Mischung aus einer Metallocenverbindung der Formel (III) und einer Organometallverbindung der Formel (IV). Optional kann aber auch eine oder mehrere Metallocenverbindungen der Formel (III) ohne vorherige Zugabe einer Organometallverbindung der Formel (IV) zu dem modifizierten Trägermaterial gegeben werden.

Die Menge an modifizierten Träger zu einer Metallocenverbindung der Formel (III) beträgt vorzugsweise 10g : 1 µmol bis 10⁻²g : 1 µmol. Das stöchiometrische Verhältnis an Metallocenverbindung der Formel (V) zu der cokatalytisch wirkenden chemischen Verbindung der Formel (II) beträgt 100 : 1 bis 10⁻⁴ : 1, vorzugsweise 1 : 1 bis 10⁻² : 1.

Das geträgerte Katalysatorsystem kann direkt zur Polymerisation eingesetzt werden. Es kann aber auch nach Entfernen des Lösemittels resuspendiert zur Polymerisation eingesetzt werden. Der Vorteil dieser Aktivierungsmethode liegt darin, daß es die Option bietet das polymerisationsaktive Katalysatorsystem erst im Reaktor entstehen zu lassen. Dadurch wird verhindert, daß beim Einschleusen des luftempfindlichen Katalysators zum Teil Zersetzung eintritt.

weiterhin wird ein Verfahren zur Herstellung eines Olefinpolymers in Gegenwart des erfindungsgemäßen Katalysatorsystems beschrieben. Die Polymerisation kann eine Homo- oder eine Copolymerisation sein.

Bevorzugt werden Olefine der Formel R-CH=CH-R^{β} polymerisiert, worin R und R^{β} gleich oder verschieden sind und ein wasserstoffatom, ein Halogenatom, eine Alkoxy-, Hydroxy-, Alkylhydroxy-, Aldehyd, Carbonsäure- oder Carbonsäureestergruppe oder einen gesättigten oder ungesättigten Kohlenwasserstoffrest mit 1 bis 20 C-Atomen, insbesondere 1 bis 10 C-Atomen bedeuten, der mit einer Alkoxy-, Hydroxy-, Alkylhydroxy-, Aldehyd-, Carbonsäure- oder Carbonsäureestergruppe substituiert sein kann, oder R^{α} und R^{β} mit den sie verbindenden Atomen einen oder mehrere Ringe bilden. Beispiele für solche Olefine sind 1-Olefine wie Ethylen, Propylen, 1-Buten, 1-Hexen, 4-Methyl-1-penten, 1-Octen, Styrol, cyclische Olefine wie Norbornen, Vinylnorbornen, Tetracyclododecen, Ethylidennorbornen, Diene wie 1,3-Butadien oder 1,4-Hexadien, Biscyclopentadien oder Methacrylsäuremethylester.

Insbesondere werden Propylen oder Ethylen homopolymerisiert, Ethylen mit einem oder mehreren C₃-C₂₀-1-Olefinen, insbesondere Propylen, und /oder einem oder mehreren C₄-C₂₀-Diene, insbesondere 1,3-Butadien, copolymerisiert oder Norbornen und Ethylen copolymerisiert.

Die Polymerisation wird bevorzugt bei einer Temperatur von - 60 bis 300 °C, besonders bevorzugt 30 bis 250 °C, durchgeführt. Der Druck beträgt 0,5 bis 2500 bar, bevorzugt 2 bis 1500 bar. Die Polymerisation kann kontinuierlich oder diskontinuierlich, einoder mehrstufig, in Lösung, in Suspension, in der Gasphase oder in einem überkritischem Medium durchgeführt werden.

Das geträgerte Katalysatorsystem kann entweder direkt im Polymerisationssystem gebildet werden oder es kann als Pulver oder noch Lösemittel behaftet wieder resuspendiert und als Suspension in einem inerten Suspensionsmittel in das Polymerisationssystem eindosiert werden.

Mit Hilfe des erfindungsgemäßen Katalysatorsystems kann eine Vorpolymerisation erfolgen. Zur Vorpolymerisation wird bevorzugt das (oder eines der) in der Polymerisation eingesetzte(n) Olefin(e) verwendet.

Zur Herstellung von Olefinpolymeren mit breiter Molekulargewichtsverteilung werden bevorzugt Katalysatorsysteme verwendet, die zwei oder mehr verschiedene Übergangsmetallverbindungen, z. B. Metallocene enthalten.

Zur Entfernung von im Olefin vorhandenen Katalysatorgiften ist eine Reinigung mit einem Aluminiumalkyl, beispielsweise Trimethylaluminium, Triethylaluminium oder Triisobutylaluminium vorteilhaft. Diese Reinigung kann sowohl im Polymerisations-system selbst erfolgen oder das Olefin wird vor der Zugabe in das Polymerisations-system mit der Al-Verbindung in Kontakt gebracht und anschließend wieder getrennt.

Als Molmassenregler und/oder zur Steigerung der Aktivität wird, falls erforderlich, Wasserstoff zugegeben. Der Gesamtdruck im Polymerisationssystem beträgt 0,5 bis 2500 bar, bevorzugt 2 bis 1500 bar.

Dabei wird die erfindungsgemäße Verbindung in einer Konzentration, bezogen auf das Übergangsmetall von bevorzugt 10⁻³ bis 10⁻⁸, vorzugsweise 10⁻⁴ bis 10⁻⁷ mol Übergangsmetall pro dm³ Lösemittel bzw. pro dm³ Reaktorvolumen angewendet.

Geeignete Lösemittel zur Darstellung sowohl der erfindungsgemäßen geträgerten chemischen Verbindung als auch des erfindungsgemäßen Katalysatorsystems sind aliphatische oder aromatische Lösemittel, wie beispielsweise Hexan oder Toluol, etherische Lösemittel, wie beispielsweise Tetrahydrofuran oder Diethylether oder halogenierte Kohlenwasserstoffe, wie beispielsweise Methylenchlorid oder halogenierte aromatische Kohlenwasserstoffe wie beispielsweise o-Dichlorbenzol.

Vor Zugabe des erfindungsgemäßen Katalysatorsystems bzw. vor Aktivierung des erfindungsgemäßen Katalysatorsystems im Polymerisationssystem kann zusätzlich eine Alkylalumiuniumverbindung wie beispielsweise Trimethylaluminium, Triethylaluminium, Triisobutylaluminium, Trioctylaluminium oder Isoprenylaluminium zur Inertisierung des Polymerisationssystems (beispielsweise zur Abtrennung vorhandener Katalysatorgifte im Olefin) in den Reaktor gegeben werden. Diese wird in einer Konzentration von 200 bis 0,001 mmol Al pro kg Reaktorinhalt dem Polymerisationssystem zugesetzt. Bevorzugt werden Triisobutylaluminium und Triethylaluminium in einer Konzentration von 10 bis 0,01 mmol Al pro kg Reaktorinhalt eingesetzt, dadurch kann bei der Synthese eines geträgerten Katalysatorsystems das molare Al/M¹-Verhältnis klein gewählt werden.

Weiterhin kann beim erfindungsgemäßen Verfahren ein Additiv wie ein Antistatikum verwendet werden, z.B. zur Verbesserung der Kornmorphologie des Polymers.

Generell können alle Antistatika, die für die Polymerisation geeignet sind, verwendet werden. Beispiele hierfür sind Salzgemische aus Calciumsalzen der Medialansäure und Chromsalze der N-Stearylanthranilsäure, die in DE-A-3,543,360 beschreiben werden. Weitere geeignete Antistatika sind z.B. C₁₂- bis C₂₂- Fettsäureseifen von Alkali- oder Erdalkalimetallen, Salze von Sulfonsäureestern, Ester von Polyethylenglycolen mit Fettsäuren, Polyoxyethylenalkylether usw. Eine Übersicht über Antistatika wird in EP-A-0,107,127 angegeben.

Außerdem kann als Antistatikum eine Mischung aus einem Metallsalz der Medialansäure, einem Metallsalz der Anthranilsäure und einem Polyamin eingesetzt werden, wie in EP-A-0,636,636 beschrieben.

Kommerziell erhältliche Produkte wie Stadis® 450 der Fa. DuPont, eine Mischung aus Toluol, Isopropanol, Dodecylbenzolsulfonsäure, einem Polyamin, einem Copolymer aus Dec-1-en und SO₂ sowie Dec-1-en oder ASA®-3 der Fa. Shell und ARU5R® 163 der Firma ICI können ebenfalls verwendet werden.

Vorzugsweise wird das Antistatikum als Lösung eingesetzt, im bevorzugten Fall von Stadis® 450 werden bevorzugt 1 bis 50 Gew.-% dieser Lösung, vorzugsweise 5 bis 25 Gew.-%, bezogen auf die Masse des eingesetzten Trägerkatalysators (Träger mit kovalent fixierter metalloceniumbildende Verbindung und eine oder mehrere Metallocenverbindungen z.B. der Formel IV) eingesetzt. Die benötigten Mengen an Antistatikum können jedoch, je nach Art des eingesetzten Antistatikums, in weiten Bereichen schwanken.

Die nachfolgenden Beispiele dienen zur näheren Erläuterung der Erfindung

Allgemeine Angaben: Herstellung und Handhabung der Verbindungen erfolgten unter Ausschulß von Luft und Feuchtigkeit unter Argonschutz (Schlenk-Technik). Alle benötigten Lösemittel wurden vor Gebrauch durch mehrstündiges Sieden über geeignete Trockenmittel und anschließende Destillation unter Argon absolutiert. Zur Charakterisierung der Verbindungen wurden Proben aus den einzelnen Reaktions-mischungen entnommen und im Ölpumpenvakuum getrocknet.

### Beispiel 1: Synthese von Bis(pentafluorophenyloxy)methylalan (1)

5.2 ml Trimethylaluminium (2M in Exxol, 10.8 mmol) werden in 40 ml Toluol vorgelegt und auf -40°C gekühlt. Zu dieser Lösung werden 4.0 g (21.6 mmol) Pentafluorophenol in 40 ml Toluol über einen Zeitraum von 30 Minuten zugetropft. Man rührt 15 Minuten bei -40 °C und läßt anschließend die Reaktionslösung auf Raumtemperatur erwärmen. Es wird eine Stunde bei Raumtemperatur nachgerührt. Es resultiert eine farblose Lösung (0.14 M bezogen auf Al) von Bis(pentafluoro-phenyloxy)methylalan.
19F-NMR (C₆D₆): δ = -160.5 ppm (m, 4F,o-C₆F₅); -161.8 ppm (m, 2F, p-C₆F₅); -166.3 ppm (m, 4F, m-C₆F₅).
1H-NMR (C₆D₆): δ = -0.4 ppm (s, 3H, CH₃).

### Beispiel 2: Synthese von Bis(pentafluorophenyloxy)ethylalan (2)

5.0 ml Triethylaluminium (2.1 M in vasol, 10.5 mmol) werden in 40 ml Toluol vorgelegt und auf -40°C gekühlt. Zu dieser Lösung werden 4.0 g (21.0 mmol) Pentafluorophenol in 40 ml Toluol über einen Zeitraum von 30 Minuten zugetropft. Man rührt 15 Minuten bei -40 °C und läßt anschließend die Reaktionslösung auf Raumtemperatur erwärmen. Es wird eine Stunde bei Raumtemperatur nachgerührt. Es resultiert eine farblose Lösung (0.13 M bezogen auf Al) von Bis(pentafluoro-phenyloxy)ethylalan.
19F-NMR (C₆D₆): δ = -160.9 ppm (m, 4F,o-C₆F₅); -162.1 ppm (m, 2F, p-C₆F₅); -167.3 ppm (m, 4F, m-C₆F₅)
1H-NMR (C₆D₆): δ = 0.5 ppm (t, 3H, CH₃), 1.6 ppm (q, 2H, CH₂).

### Beispiel 3: Synthese von Bis(pentafluoroanilin)methyalan (3)

5.0 ml Trimethylaluminium (2.1 M in Exxol, 10.5 mmol) werden in 40 ml Toluol vorgelegt und auf -40°C gekühlt. Zu dieser Lösung werden 3.8 g (21.0 mmol) Pentafluoroanilin in 40 ml Toluol über einen Zeitraum von 30 Minuten zugetropft. Man rührt 15 Minuten bei -40 °C und läßt anschließend die Reaktionslösung auf Raumtemperatur erwärmen. Es wird zwei Stunde bei Raumtemperatur nachgerührt. Es resultiert eine gelbliche Lösung (0.13 M bezogen auf Al) von Bis(pentafluoro-anilin)methylalan.
19F-NMR (C₆D₆): δ = -162.9 ppm (m, 4F,o-C₆F₅); -164.1 ppm (m, 2F, p-C₆F₅); -171.3 ppm (m, 4F, m-C₆F₅)
1H-NMR (C₆D₆): δ = -0.4 ppm (t, 3H, CH₃), 5.6 ppm (s, 1H, NH).

### Beispiel 4: Synthese von Bis(bis(pentafluorophenyl)methylenmethyalan (4)

5.0 ml Trimethylaluminium (2.1 M in Exxol, 10.5 mmol) werden in 40 ml Toluol vorgelegt und auf -40°C gekühlt. Zu dieser Lösung werden 7.6 g (21.0 mmol) Bis(pentafluorophenyl)carbinol in 40 ml Toluol über einen Zeitraum von 30 Minuten zugetropft. Man rührt 15 Minuten bei -40 °C und läßt anschließend die Reaktionslösung auf Raumtemperatur erwärmen. Es wird zwei Stunde bei Raumtemperatur nachgerührt. Es resultiert eine gelbliche Lösung (0.13 M bezogen auf Al) von Bis(bis(pentafluorophenyl)methylenmethyalan.
19F-NMR (C₆D₆): δ = -140.6 ppm (m, 4F, O-CH(C₆F₅)₂); -151.7 ppm (m, 2F, p-CH(C₆F₅)₂); -159.5 ppm (m, 4F, m-CH(C₆F₅)₂).
1H-NMR (C₆D₆): δ = 6.2 ppm (s, 1H, CH).

### Beispiel 5: Synthese von Bis(bis(3,5 trifluoromethyl)anilin)methyalan (5)

5.0 ml Trimethylaluminium (2.1 M in Exxol, 10.5 mmol) werden in 40 ml Toluol vorgelegt und auf -40°C gekühlt. Zu dieser Lösung werden 4.8 g (21.0 mmol) 3,5 Bis(trifluoromethyl)anilinin 40 ml Toluol über einen Zeitraum von 45 Minuten zugetropft. Man rührt 15 Minuten bei -40 °C und läßt anschließend die Reaktionslösung auf Raumtemperatur erwärmen. Es wird vier Stunde bei Raumtemperatur nachgerührt. Die leicht trübe Lösung wird über eine G4-Fritte abfiltriert. Es resultiert eine gelbliche klare Lösung (0.13 M bezogen auf Al) von Bis(bis(3,5 trifluoromethyl)anilin)methyalan.
19F-NMR (C₆D₆): δ = -61.5 ppm (s, 12F, CF₃).
1H-NMR (C₆D₆): δ = 5.5 ppm (s, 1H, NH), 6.3 ppm (s, 2H, Ar-H), 7.2 ppm (s, 1H, Ar-H).

### Beispiel 6: Synthese von Bis(nonanfluorodiphenyloxy)methyalan (6)

5.0 ml Trimethylaluminium (2.1 M in Exxol, 10.5 mmol) werden in 40 ml Toluol vorgelegt und auf -40°C gekühlt. Zu dieser Lösung werden 7.0 g (21.0 mmol) Nonafluorodiphenyl-1-ol in 40 ml Toluol über einen Zeitraum von 40 Minuten zugetropft. Man rührt 30 Minuten bei -40 °C und läßt anschließend die Reaktionslösung auf Raumtemperatur erwärmen. Es wird einer Stunde bei Raumtemperatur nachgerührt. Die leicht trübe Lösung wird über eine G4-Fritte abfiltriert. Es resultiert eine klare Lösung (0.13 M bezogen auf Al) von Bis(nonanfluorodiphenyloxy)methyalan.
19F-NMR (C₆D₆): δ = -134.0 ppm (m, 2F, 2,2'-F); -137.2 ppm (m, 2F, 3, 3'-F); -154.6 ppm (m, 2F, 4, 4'-F); 157.0 ppm (m, 1F, 6-F); 161.7 (m, 2F, 5, 5'-F).
1H-NMR (C₆D₆): δ = -0.3 ppm (s, 3H, CH₃).

Allgemeine Beschreibung der Trägerung, Katalysatorherstellung und Polymerisationsdurchführung
A) Trägerung:
   14.0 g SiO₂ (XPO 2107, Fa. Grace, getrocknet bei 600°C im Argonstrom) werden in 20 ml Toluol vorgelegt, 2.6 ml N,N-Dimethylanilin (20.80 mmol) zugetropft und zwei Stunden bei Raumtemperatur gerührt. Anschließend werden bei 0 °C 20.80 mmol des entsprechenden Cokatalysators, gelöst in 40 ml Toluol, zugegeben. Man läßt auf Raumtemperatur erwärmen und rührt die Suspension zwei Stunden bei dieser Temperatur. Die entstandene bläuliche Suspension wird abfiltriert und der Rückstand mit 50 ml Toluol und anschließend mit dreimal 100 ml n-Pentan gewaschen. Danach wir der rückstand im Ölpumpenvakuum getrocknet. Es resultiert das geträgerte Cokatalysatorsystem welches ausgewogen wird.
B) Herstellung des Katalysatorsystems
   Zu einer Lösung von 50 mg (80 µmol) Dimethylsilandiylbis(2-methyl-4-phenyl-indenyl)zirkoniumdichlorid in 50 ml Toluol werden 0.30 ml Trimethylaluminium (20% ig in Exxol, 700 µmol) zugegeben und die Lösung 1.5 Stunden bei RT gerührt. Anschließend werden 960 µmol/g [SiO₂] des unter A Trägerung hergestellten Cokatalysators portionsweise zugegeben. Die Lösung wird 30 Minuten bei Raumtemperatur gerührt. Danach entfernt man das Lösemittel im Ölpumpenvakuum. Es resultiert ein hellrotes freifließendes Pulver.

### Beispiel 4

### Polymerisation

Zum Einschleusen in das Polymerisationssystem wird die entsprechende Menge des unter B hergestellten geträgerten Katalysatorsystems (6 µmol Metallocen) in 30 ml Exxol resuspendiert.

Parallel dazu wird ein trockener 16-dm³-Reaktor zunächst mit Stickstoff und anschließend mit Propylen gespült und mit 10 dm³ flüssigem Propen befüllt. Dann wurden 0.5 cm³ einer 20%igen Triisobutylaluminiumlösung in Varsol mit 30 cm³ Exxol verdünnt in den Reaktor gegeben und der Ansatz bei 30°C 15 Minuten gerührt. Anschließend wurde die Katalysatorsuspension in den Reaktor gegeben. Das Reaktionsgemisch wurde auf die Polymerisationstemperatur von 60 °C aufgeheizt (4°C/min) und das Polymerisationssystem 1 h durch Kühlung bei 60 °C gehalten. Gestoppt wurde die Polymerisation durch Abgasen des restlichen Propylens. Das Polymer wird im Vakuumtrockenschrank getrocknet. Der Reaktor zeigte keine Beläge an der Innenwand oder Rührer.

### Polymerisationsergebnisse

| Getr. Katalysatorsystem hergestellt aus Beispiel: | 1 | 2 | 3 | 4 | 5 | 6 |
|---|---|---|---|---|---|---|
| Metallocenmenge [mg] | 50 | 50 | 50 | 50 | 50 | 50 |
| Metallocen (mmol) | 80 | 80 | 80 | 80 | 80 | 80 |
| Cokatalysator (mmol) | 960 | 960 | 960 | 960 | 960 | 960 |
| Einwaage SiO₂ [g] | 14.0 | 14.0 | 14.0 | 14.0 | 14.0 | 14.0 |
| Auswaage SiO₂ [g] | 19.95 | 19.28 | 19.46 | 23.60 | 21.49 | 23.49 |
| Einwaage geträgerter Cokatalysator [mg] | 923 | 1074 | 1000 | 1074 | 893 | 997 |
| Auswaage Katalysator-system [mg] | 975 | 1124 | 1050 | 1124 | 943 | 1047 |
| Einwaage Katalysator-system für Polymeri-sation [mg] [6 mmol Metallocen] | 73 | 85 | 79 | 85 | 71 | 79 |
| Dauer (min) | 60 | 60 | 60 | 60 | 60 | 60 |
| PP (kg) | 0.622 | 0.480 | 0.484 | 0.589 | 0.281 | 0.589 |
| Aktivität ¹⁾ | 166 | 128 | 129 | 157 | 75 | 157 |

| | | | | | | |
|---|---|---|---|---|---|---|
| 1) Aktivität: kg (PP) / g Metallocen x h | | | | | | |

## Patentansprüche

1. Katalysatorsystem enthaltend
A) mindestens ein Metallocen,
B) mindestens eine Lewis Base der Formel I
M¹R³R⁴R⁵ (I)
worin
R³, R⁴, R⁵ gleich oder verschieden sind und ein Wasserstoffatom, eine C₁-C₂₀ Alkyl-, C₁-C₂₀ Halogenalkyl-, C₆-C₄₀ Aryl-, C₆-C₄₀ Halogenaryl-, C₇-C₄₀ Alkylaryl- oder C₇-C₄₀ Arylalkyl-Gruppe ist und zwei Reste oder alle drei Reste R³, R⁴ und R⁵ über C₂-C₂₀ Kohlenstoffeinheiten miteinander verbunden sein können,
M¹ ist ein Element der v. Hauptgruppe des Periodensystems der Elemente, insbesondere Stickstoff oder Phosphor
C) mindestens einen Träger
D) und mindestens eine Organobor- oder Organoaluminium-Verbindung, die aus Einheiten der Formel II
[(R⁶)-X-M²(R⁸)-X-(R⁷)]ₖ (II)
worin
R⁶, R⁷ gleich oder verschieden sind und ein Wasserstoffatom, ein Halogenatom, eine borfreie C₁-C₄₀-kohlenstoffhaltige Gruppe wie C₁-C₂₀-Alkyl, C₁-C₂₀-Halogenalkyl. C₁-C₁₀-Alkoxy, C₆-C₂₀-Aryl, C₆-C₂₀-Halogenaryl, C₆-C₂₀-Aryloxy, C₇-C₄₀-Arylalky, C₇-C₄₀-Halogenarylalky, C₇-C₄₀-Alkylaryl, C₇-C₄₀-Halogenalkylaryl oder eine SiR₃⁹-Gruppe bedeutet,
wobei R⁹ eine borfreie C₁-C₄₀-kohlenstoffhaltige Gruppe wie C₁-C₂₀-Alkyl, C₁-C₂₀-Halogenalkyl, C₁-C₁₀-Alkoxy, C₆-C₂₀-Aryl, C₆-C₂₀-Malogenaryl, C₆-C₂₀-Aryloxy, C₇-C₄₀-Arylalky, C₇-C₄₀-Halogenarylalky, C₇-C₄₀-Alkylaryl, C₇-C₄₀-Halogenalkylaryl sein kann,
R⁸ kann gleich oder verschieden zu R⁶ und R⁷, ein wasserstoffatom, ein Halogenatom, eine C₁-C₄₀-kohlenstoffhaltige Gruppe wie C₁-C₂₀-Alkyl, C₁-C₂₀-Halogenalkyl, C₁-C₁₀-Alkoxy, C₆-C₂₀-Aryl, C₆-C₂₀-Halogenaryl, C₆-C₂₀-Aryloxy, C₇-C₄₀-Arylalky, C₇-C₄₀-Halogenarylalky, C₇-C₄₀-Alkylaryl, C₇-C₄₀-Halogenalkylaryl oder eine OSiR⁹₃-Gruppe bedeutet,
x gleich oder verschieden ein Element der Gruppe v oder VIa des Periodensystems der Elemente oder eine NH-Gruppe bedeutet,
M² ein Element der Gruppe IIIa des Periodensystems der Elemente bedeutet und
k eine natürliche Zahl von 1 bis 100 bedeutet aufgebaut ist und die kovalent an den Träger gebunden ist.

2. Katalysatorsystem gemäß Anspruch 1, **dadurch gekennzeichnet, daß** es zusätzlich noch eine Organometallverbindung der Formel (IV)
[M⁵R²⁰ ₚ]_{q} (IV)
worin
M⁵ ein Element der I., II. und III. Hauptgruppe des Periodensystems der Elemente ist, vorzugsweise Lithium, Magnesium und Aluminium, insbesondere Aluminium, ist
R²⁰ gleich oder verschieden ein Wasserstoffatom, ein Halogenatom, eine C₁-C₄₀-kohlenstoffhaltige Gruppe wie eine C₁-C₂₀- Alkyl-, C₆-C₄₀-Aryl-, C₇-C₄₀-Aryl-alkyl oder C₇-C₄₀-Alkyl-aryl-Gruppe, bedeutet,
p eine ganze Zahl von 1 bis 3 und
q eine ganze Zahl von 1 bis 4 ist, enthält.

3. verfahren zur Herstellung eines Polyolefins durch Polymerisation eines oder mehrerer Olefine in Gegenwart eines Katalysatorsystems nach einem der Ansprüche 1 oder 2.

4. Verwendung eines Katalysatorsystems gemäß einem der Ansprüche 1 oder 2 zur Herstellung eines Polyolefins.

## Claims

1. A catalyst system comprising
A) at least one metallocene,
B) at least one Lewis base of the formula I
M¹R³R⁴R⁵ (I)
where
R³, R⁴, R⁵ are identical or different and are each a hydrogen atom or a C₁-C₂₀-alkyl, C₁-C₂₀-haloalkyl, C₆-C₄₀-aryl, C₆-C₄₀-haloaryl, C₇-C₄₀-alkylaryl or C₇-C₄₀-arylalkyl group or two or all three of the radicals R³, R⁴ and R⁵ may be joined to one another via C₂-C₂₀ units,
M¹ is an element of main group V of the Periodic Table of the Elements, in particular nitrogen or phosphorus
C) at least one support
D) and at least one organoboron or organoaluminum compound which is made up of units of the formula II
[(R⁶)-X-M²(R⁸)-X-(R⁷)]ₖ (II)
where
R⁶, R⁷ are identical or different and are each a hydrogen atom, a halogen atom, a boron-free C₁-C₄₀ group such as C₁-C₂₀-alkyl, C₁-C₂₀-haloalkyl, C₁-C₁₀-alkoxy, C₆-C₂₀-aryl, C₆-C₂₀-haloaryl, C₆-C₂₀-aryloxy, C₇-C₄₀-arylalkyl, C₇-C₄₀-haloarylalkyl, C₇-C₄₀-alkylaryl, C₇-C₄₀-haloalkylaryl or an Si(R⁹)₃ group,
where R⁹ is a boron-free C₁-C₄₀ group such as C₁-C₂₀-alkyl, C₁-C₂₀-haloalkyl, C₁-C₁₀-alkoxy, C₆-C₂₀-aryl, C₆-C₂₀-haloaryl, C₆-C₂₀-aryloxy, C₇-C₄₀-arylalkyl, C₇-C₄₀-haloarylalkyl, C₇-C₄₀-alkylaryl, C₇-C₄₀-haloalkylaryl,
R⁸ can be identical to or different from R⁶ and R⁷ and is a hydrogen atom, a halogen atom, a C₁-C₄₀ group such as C₁-C₂₀-alkyl, C₁-C₂₀-haloalkyl, C₁-C₁₀-alkoxy, C₆-C₂₀-aryl, C₆-C₂₀-haloaryl, C₆-C₂₀-aryloxy, C₇-C₄₀-arylalkyl, C₇-C₄₀-haloarylalkyl, C₇-C₄₀-alkylaryl, C₇-C₄₀-haloalkylaryl or an OSi(R⁹)₃ group,
X may be identical or different and are each an element of group V or VIa of the Periodic Table of the Elements or an NH group,
M² is an element of group IIIa of the Periodic Table of the Elements and
k is a natural number from 1 to 100,
and is covalently bound to the support.

2. A catalyst system as claimed in claim 1 which further comprises an organometallic compound of the formula (IV)
[M⁵R²⁰ ₚ]_{q} (IV)
where
M⁵ is an element of main group I, II or III of the Periodic Table of the Elements, preferably lithium, magnesium or aluminum, in particular aluminum,
R²⁰ are identical or different and are each a hydrogen atom, a halogen atom or a C₁-C₄₀ group such as C₁-C₂₀-alkyl, C₆-C₄₀-aryl, C₇-C₄₀-arylalkyl or C₇-C₄₀-alkylaryl,
p is an integer from 1 to 3 and
q is an integer from 1 to 4.

3. A process for preparing a polyolefin by polymerization of one or more olefins in the presence of a catalyst system as claimed in claim 1 or 2.

4. The use of a catalyst system as claimed in claim 1 or 2 for preparing a polyolefin.

## Revendications

1. Système catalyseur comprenant
A) au moins un métallocène,
B) au moins une base de Lewis de formule I
M¹R³R⁴R⁵ (I)
dans laquelle
R³, R⁴, R⁵ sont identiques ou différents et représentent chacun un atome d'hydrogène, un groupe alkyle en C₁-C₂₀, halogènalkyle en C₁-C₂₀, aryle en C₆-C₄₀, halogènaryle en C₆-C₄₀, alkylaryle en C₇-C₄₀ ou arylalkyle en C₇-C₄₀, et deux radicaux, ou les trois radicaux R³, R⁴ et R⁵, peuvent être reliés les uns aux autres par l'intermédiaire de motifs carbonés en C₂-C₂₀,
M¹ est un élément du Vème groupe principal du Tableau Périodique des Eléments, en particulier l'azote ou le phosphore,
C) désigne au moins un support,
D) et au moins un composé organique du bore ou de l'aluminium, qui est constitué de motifs de formule II
[(R⁶)-X-M²-(R⁸)-X-(R⁷)]ₖ (II)
dans laquelle
R⁶ et R⁷ sont identiques ou différents et représentent chacun un atome d'hydrogène, un atome d'halogène, un groupe carboné en C₁-C₄₀ exempt de bore tel qu'un groupe alkyle en C₁-C₂₀, halogènalkyle en C₁-C₂₀, alcoxy en C₁-C₁₀, aryle en C₆-C₂₀, halogènaryle en C₆-C₂₀, aryloxy en C₆-C₂₀, arylalkyle en C₇-C₄₀, halogènarylalkyle en C₇-C₄₀, alkylaryle en C₇-C₄₀, halogènalkylaryle en C₇-C₄₀ ou un groupe SiR₃⁹,
où R⁹ peut être un groupe carboné en C₁-C₄₀ exempt de bore tel qu'un groupe alkyle en C₁-C₂₀, halogènalkyle en C₁-C₂₀, alcoxy en C₁-C₁₀, aryle en C₆-C₂₀, halogènaryle en C₆-C₂₀, aryloxy en C₆-C₂₀, arylalkyle en C₇-C₄₀, halogènarylalkyle en C₇-C₄₀, alkylaryle en C₇-C₄₀, halogènalkylaryle en C₇-C₄₀,
R⁸ peut être identique à R⁶ et R⁷ ou en être différent, et représente un atome d'hydrogène, un atome d'halogène, un groupe carboné en C₁-C₄₀ tel qu'un groupe alkyle en C₁-C₂₀, halogènalkyle en C₁-C₂₀, alcoxy en C₁-C₁₀, aryle en C₆-C₂₀, halogènaryle en C₆-C₂₀, aryloxy en C₆-C₂₀, arylalkyle en C₇-C₄₀, halogènarylalkyle en C₇-C₄₀, alkylaryle en C₇-C₄₀, halogènalkylaryle en C₇-C₄₀, ou un groupe OSiR⁹₃,
les radicaux x sont identiques ou différents et représentent chacun un élément du groupe V ou VIa du Tableau Périodique des Eléments ou un groupe NH,
M² est un élément du groupe IIIa du Tableau Périodique des Eléments, et
k est un nombre entier de 1 à 100,
et qui est lié d'une manière covalente au support.

2. Système catalyseur selon la revendication 1, **caractérisé en ce qu'**il contient en outre et encore un composé organométallique de formule (IV)
[M⁵R²⁰ₚ]_{q} (IV)
dans laquelle
M⁵ est un élément du Ier, du IIème et du IIIème groupes principaux du Tableau Périodique des Eléments, de préférence le lithium, le magnésium et l'aluminium, en particulier l'aluminium,
les radicaux R²⁰ sont identiques ou différents et représentent chacun un atome d'hydrogène, un atome d'halogène, un groupe carboné en C₁-C₄₀ tel qu'un groupe alkyle en C₁-C₂₀, aryle en C₆-C₄₀, arylalkyle en C₇-C₄₀ ou alkylaryle en C₇-C₄₀,
p est un nombre entier de 1 à 3, et
q est un nombre entier de 1 à 4.

3. Procédé de préparation d'une polyoléfine par polymérisation d'une ou plusieurs oléfines en présence d'un catalyseur selon l'une des revendications 1 ou 2.

4. Utilisation d'un système catalyseur selon l'une des revendications 1 ou 2 pour préparer une polyoléfine.
